# EUROPEAN PATENT APPLICATION

(11) **EP 2 416 212 A1**
(43) Date of publication of application: **08.02.2012**
(21) Application number: 10758220.7
(22) Date of filing: 25.03.2010
(51) Int. Cl.: G02F 1/1343, G02F 1/1337

(54) **LIQUID CRYSTAL DISPLAY DEVICE**

(30) Priority: 31.03.2009 JP 2009086767
(71) Applicant: Sharp Kabushiki Kaisha, Osaka-shi, Osaka 545-8522 (JP)
(72) Inventor: TASHIRO, Kunihiro, Osaka-shi, Osaka 545-8522 (JP); HAYANO, Takayuki, Osaka-shi, Osaka 545-8522 (JP); NISHIWAKI, Shogo, Osaka-shi, Osaka 545-8522 (JP)
(74) Representative: Müller - Hoffmann & Partner
(86) International application number: PCT/JP2010/002101
(87) International publication number: WO 2010/113435

(57) **Abstract**

In a liquid crystal display device using pixel electrodes having a fishbone structure as well as using the PSA technology, the occurrence of an azimuthal angle shift in the vicinity of the pixel edge is suppressed. A liquid crystal display device according to the present invention is a liquid crystal display device comprising a plurality of pixels and a pair of polarizing plates located in crossed Nicols and providing display in a normally black mode. Each of the plurality of pixels includes a liquid crystal layer containing liquid crystal molecules having a negative dielectric anisotropy; a pixel electrode and a counter electrode facing each other with the liquid crystal layer interposed therebetween; a pair of vertical alignment films respectively provided between the pixel electrode and the liquid crystal layer and between the counter electrode and the liquid crystal layer; and a pair of alignment sustaining layers respectively provided on surfaces of the pair of vertical alignment films on the liquid crystal layer side and formed of a photopolymerizable material. The pixel electrode includes a cross-shaped trunk portion located so as to overlap polarization axes of the pair of polarizing plates, a plurality of branch portions extending from the trunk portion in a direction having an angle of about 45° with respect thereto, and a plurality of slits formed between the plurality of branch portions. The pixel electrode has an overall shape which is a generally parallelogram shape with four right angles, each of four sides of which has an angle of about 45° with respect to the polarization axes of the pair of polarizing plates. The plurality of branch portions are located generally symmetrically with respect to the trunk portion.

## Description

### TECHNICAL FIELD

The present invention relates to a liquid crystal display device, and specifically to a liquid crystal display device in which a 4-domain alignment structure is formed in each of pixels in the presence of a voltage.

### BACKGROUND ART

Currently, as liquid crystal display devices having a wide viewing angle characteristic, liquid crystal display devices of transverse electric field modes (including an IPS mode and an FFS mode) and liquid crystal display devices of vertical alignment modes (VA modes) are used. The VA modes are more suitable for mass production than the transverse electric field modes and so are widely used for TVs and mobile devices. Among the VA modes, an MVA mode is most widely used. The MVA mode is disclosed in, for example, Patent Document 1.

In an MVA-mode liquid crystal display device, linear alignment regulation means (slits or ribs formed in or on electrodes) are located in two directions perpendicular to each other, and four liquid crystal domains are formed between the linear alignment regulation means. The azimuthal angle of directors which are representative of respective liquid crystal domains is 45° with respect to polarization axes (transmission axes) of a pair of polarizing plates placed in crossed Nicols. Where the azimuths of the polarization axes (transmission axes) are 0° and 90°, the azimuthal angles of the directors of the four liquid crystal domains are 45°, 135°, 225° and 315°. The structure in which four domains are formed in one pixel is referred to as the "4-domain alignment structure" or simply as the "4D structure".

For the purpose of improving the responsiveness of the MVA-mode liquid crystal display devices, the technology called the "polymer sustained alignment" (occasionally referred to as the "PSA technology" has been developed (see, for example, Patent Documents 2 through 7). According to the PSA technology, after a liquid crystal cell is produced, a photopolymerizable monomer mixed in a liquid crystal material in advance is polymerized in the state where the liquid crystal layer is supplied with a voltage. Thus, an alignment sustaining layer ("polymer layer") is formed, and this is used to pretilt liquid crystal molecules. By adjusting the distribution and strength of the electric field applied for polymerizing the monomer, the pretilt azimuth (azimuthal angle in the substrate plane) and the pretilt angle (angle of rise from the substrate plane) of the liquid crystal molecules can be controlled.

Patent Documents 3 through 7 also disclose a structure which uses a pixel electrode having a minute striped pattern as well as the PSA technology. According to this structure, when a voltage is applied to the liquid crystal layer, the liquid crystal molecules are aligned parallel to a longitudinal direction of the striped pattern. This is contrasting to the conventional MVA-mode liquid crystal display device described in Patent Document 1, in which the liquid crystal molecules are aligned perpendicular to the linear alignment regulation structures such as slits, ribs or the like. The lines and spaces of the minute striped pattern (occasionally referred to as the "fishbone structure") may have a width smaller than the width of the alignment regulation means of the conventional MVA-mode liquid crystal display device. Therefore, the fishbone structure has an advantage of being applicable to small pixels more easily than the alignment regulation means of the conventional MVA-mode liquid crystal display device.

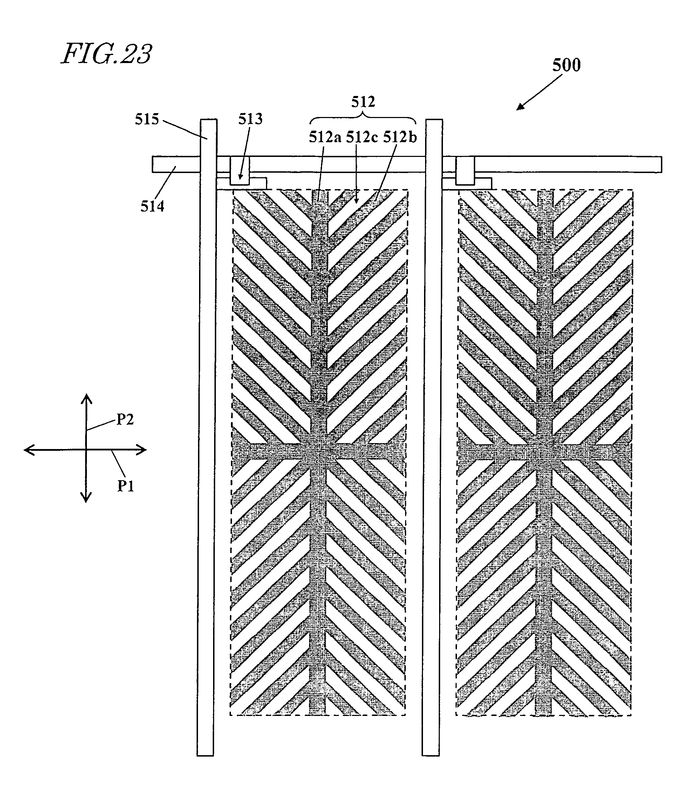

FIG. **23** shows a conventional liquid crystal display device **500** including pixel electrodes **512** having a fishbone structure. As shown in FIG. **23****,** the pixel electrodes 512 of the liquid crystal display device **500** each include a cross-shaped trunk portion **512a** located so as to overlap polarization axes **P1** and **P2** of a pair of polarizing plates located in crossed Nicols, a plurality of branch portions **512b** extending from the trunk portion **12a** in a direction having an angle of about 45° with respect thereto, and a plurality of slits **512c** formed between the plurality of branch portions **512b.** The pixel electrode **512** is electrically connected to a thin film transistor (TFT) **513.** The TFT **513** is supplied with a scanning signal from a scanning line **514** and an image signal from a signal line **515.**

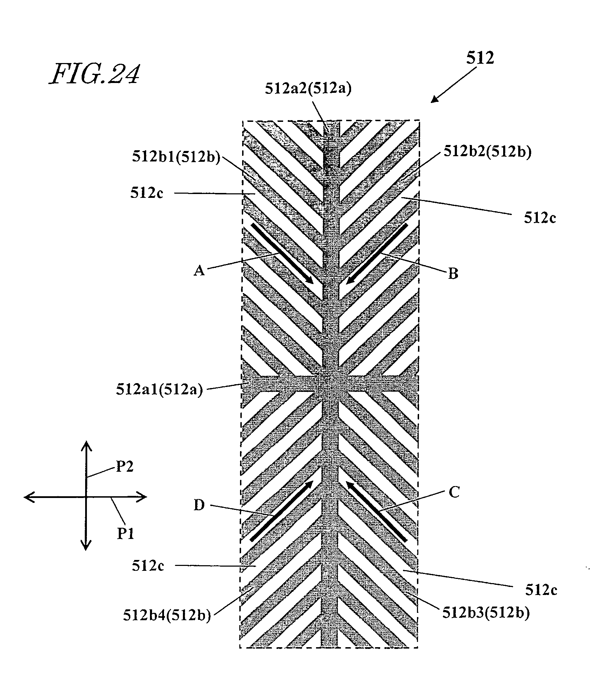

FIG. **24** shows the relationship between the fishbone structure of the pixel electrode **512** and the azimuths of directors of liquid crystal domains. As shown in FIG. **24****,** the trunk portion **512a** of the pixel electrode **512** includes a linear portion (horizontal linear portion) **512a1** extending in a horizontal direction and a linear portion (vertical linear portion) **512a2** extending in a vertical direction. The horizontal linear portion **512a1** and the vertical linear portion **512a2** cross each other (perpendicularly) at the center of the pixel.

The plurality of branch portions **512b** are divided into four groups corresponding to four areas separated from each other by the cross-shaped trunk portion **512a.** It is now assumed that the display plane is the face of a clock, that the azimuthal angle of 0° corresponds to the 9 o'clock direction, and that the clockwise direction is a forward direction. With such assumptions, the plurality of branch portions **512b** are divided into a first group of branch portions **512b1** extending in an azimuthal angle direction of 45°, a second group of branch portions **512b2** extending in an azimuthal angle direction of 135°, a third group of branch portions **512b3** extending in an azimuthal angle direction of 225°, and a fourth group of branch portions **512b4** extending in an azimuthal angle direction of 315°.

The plurality of slits **512c** each extend in the same direction as the branch portion **512b** adjacent thereto. Specifically, the slits **512c** between the branch portions **512b1** of the first group extend in the azimuthal angle direction of 45°, and the slits **512c** between the branch portions **512b2** of the second group extend in the azimuthal angle direction of 135°. The slits **512c** between the branch portions **512b3** of the third group extend in the azimuthal angle direction of 225°, and the slits **512c** between the branch portions **512b4** of the fourth group extend in the azimuthal angle direction of 315°.

In the presence of a voltage, an oblique electric field generated in each slit (i.e., an area of the pixel electrode **512** where a conductive film does not exist) **512c** defines the azimuth in which the liquid crystal molecules are inclined (azimuthal angle component of a longer axis of the liquid crystal molecules inclined by the electric field). This azimuth is parallel to the branch portions **512b** (i.e., parallel to the slits **512c**) and is directed to the trunk portion **512a** (i.e., different by 180° from an azimuth in which the branch portions **512b1** extend). Specifically, the azimuthal angle of the inclining azimuth defined by the branch portions **512b1** of the first group (first azimuth: arrow **A**) is about 225°. The azimuthal angle of the inclining azimuth defined by the branch portions **512b2** of the second group (second azimuth: arrow **B**) is about 315°. The azimuthal angle of the inclining azimuth defined by the branch portions **512b3** of the third group (third azimuth: arrow **C**) is about 45°. The azimuthal angle of the inclining azimuth defined by the branch portions **512b4** of the fourth group (fourth azimuth: arrow **D**) is about 135°. The above-mentioned four azimuths **A** through **D** are the azimuths of the directors of the liquid crystal domains in the 4D structure, which is formed when a voltage is applied. The azimuths **A** through **D** are generally parallel to any one of the plurality of branch portions **512b** and have an angle of about 45° with respect to the polarization axes **P1** and **P2** of the pair of polarizing plates. A difference between any two azimuths among the azimuths **A** through **D** is approximately equal to an integral multiple of 90°, and the azimuths of the directors of the liquid crystal domains which are adjacent to each other with the trunk portion **512a** interposed therebetween (e.g., the azimuths **A** and **B**) are different from each other by about 90° .

As described above, in the presence of a voltage, the liquid crystal molecules are aligned in directions having an angle of about 45° with respect to the polarization axes **P1** and **P2,** namely, the azimuthal angle directions of 45°, 135°, 225° and 315°. Thus, the 4D structure is formed in each pixel.

### CITATION LIST

### PATENT LITERATURE

Patent Document 1: Japanese Laid-Open Patent Publication No. 11-242225
Patent Document 2: Japanese Laid-Open Patent Publication No. 2002-357830
Patent Document 3: Japanese Laid-Open Patent Publication No. 2003-149647
Patent Document 4: Japanese Laid-Open Patent Publication No. 2006-78968
Patent Document 5: Japanese Laid-Open Patent Publication No. 2003-177418
Patent Document 6: Japanese Laid-Open Patent Publication No. 2003-287753
Patent Document 7: Japanese Laid-Open Patent Publication No. 2006-330638

### SUMMARY OF INVENTION

### TECHNICAL PROBLEM

However, as can be seen from FIG. **23****,** a gap between one pixel electrode **512** and another pixel electrode **512** adjacent thereto extends in a direction generally parallel to, or generally perpendicular to, the polarization axes **P1** and **P2.** Therefore, the liquid crystal molecules in the vicinity of an outer edge of the pixel (pixel edge) are aligned in directions perpendicular to the direction in which such gaps extend, namely, in the azimuthal angle directions of 0°, 90°, 180° and 270° by oblique electric fields generated in the gaps. In other words, the liquid crystal molecules in the vicinity of the pixel edge are aligned in azimuths different from the azimuths of the directors of the liquid crystal domains. As can be seen, the alignment azimuths of the liquid crystal molecules are shifted in the vicinity of the pixel edge, and such a shift (hereinafter, referred to as the "azimuthal angle shift") influences and thus lowers the transmittance.

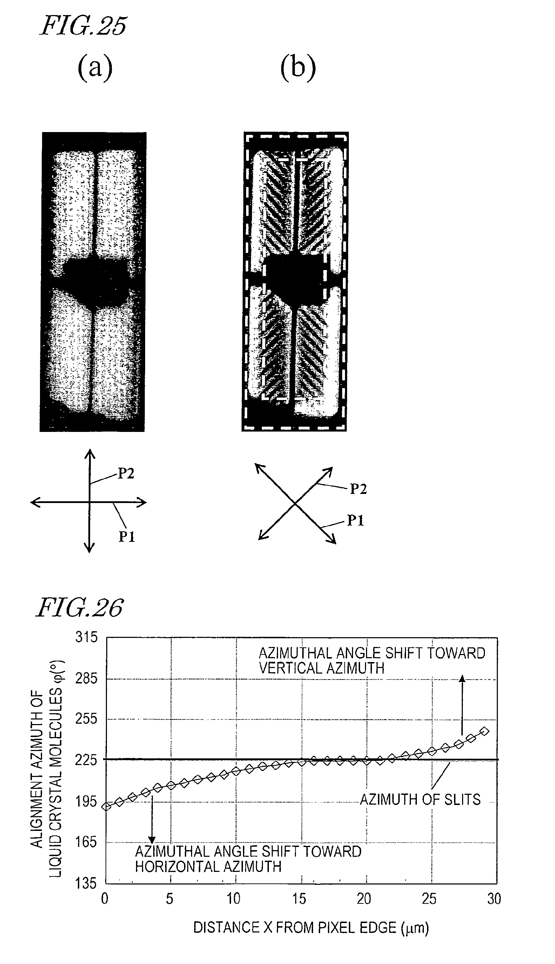

FIG. **25(a)** is a microphotograph of one pixel in the presence of a voltage. As can be seen from FIG. **25(a)****,** the luminance is lowered (i.e., the transmittance is lowered) due to the azimuthal angle shift in the vicinity of the pixel edge. FIG. **25(b)** is taken after the polarization axes **P1** and **P2** of the pair of polarizing plates in the structure shown in FIG. **25(a)** are rotated by 45°. In the case where the polarization axes **P1** and **P2** are located in this manner, an area in which the liquid crystal molecules are aligned in desired azimuths (azimuths **A** through **D**) owing to the fishbone structure appears dark because such an area does not give any retardation to the incident light. As shown in FIG. **25(b)****,** light leaks in the vicinity of the pixel edge, which indicates that the azimuthal angle shift occurs. Needless to say, the locations of the polarization axes **P1** and **P2** in FIG. **25(b)** are provided so that it is easily understood that the azimuthal angle shift has occurred, and display cannot be provided with such locations of the polarization axes **P1** and **P2.**

When the azimuthal angle shift occurs, the viewing angle dependence of the γ characteristic is deteriorated. The "γ characteristic" is the gray scale dependence of the display luminance, and the "viewing angle dependence of the γ characteristic" is a problem that the γ characteristic obtained when the display is seen from the front direction and the γ characteristic obtained when the display is seen in an oblique direction are different. Specifically, the deterioration of the viewing angle dependence of the γ characteristic, which is caused by the azimuthal angle shift, is visually recognized as a phenomenon that the γ characteristic obtained when the display is seen in an oblique direction is significantly shifted upward and the colors of the display are faded (referred to as the "washout" or "color shift").

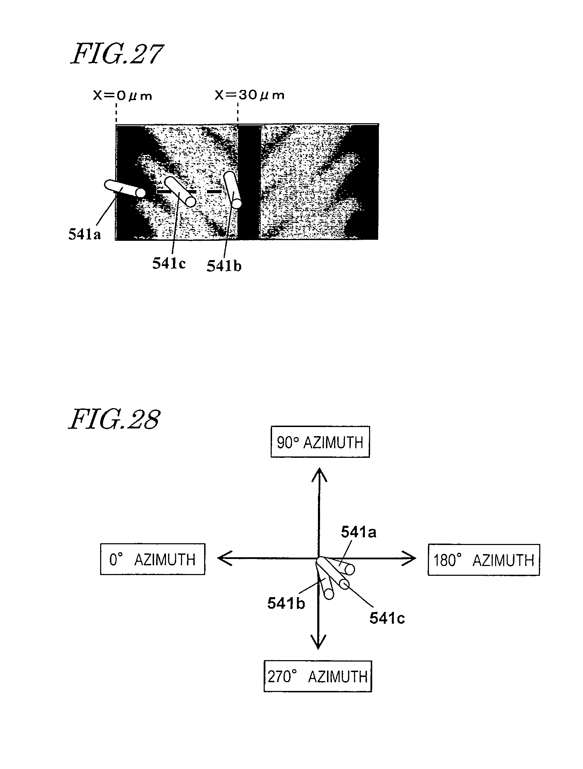

FIG. **26****,** FIG. **27** and FIG. **28** show alignment profiles of the upper left area of the pixel (area in which the branch portions **512b1** of the first group are located), which were found by calculations. FIG. **26** is a graph showing the relationship between the distance X (µm) from the pixel edge and the alignment azimuth (ϕ(°) of the liquid crystal molecules. FIG. **27** and FIG. **28** show the alignment azimuths of liquid crystal molecules **541a** in the vicinity of the pixel edge (X = 0 µm), liquid crystal molecules **541b** in the vicinity of the trunk portion **512a** (X = 30 µm), and liquid crystal molecules **541c** located in an intermediate area therebetween (X = 15 µm). The calculations were made with the settings that the width of the trunk portion **512a** is 5 µm, the width of the branch portion **512b** is 3 µm, the gap between the branch portions **512b** adjacent each other is 3 µm, and the gap between the pixel electrodes **512** adjacent each other is 8 µm.

As can be seen from FIG. **26****,** FIG. **27** and FIG. **28****,** the alignment azimuth ϕ of the liquid crystal molecules **541c** in the intermediate area is 225°. This azimuth is parallel to the slits **512c** and is directed to the trunk portion **512a** (i.e., different by 180° from an azimuth in which the branch portions **512b** extend). By contrast, the alignment azimuth ϕ of the liquid crystal molecules **541a** in the vicinity of the pixel edge is significantly shifted toward the horizontal azimuth (toward the azimuthal angle direction of 180°). The alignment azimuth ϕ of the liquid crystal molecules **541b** in the vicinity of the trunk portion **512a** is significantly shifted toward the vertical azimuth (toward the azimuthal angle direction of 270°). As can be seen, the azimuthal angle shift occurs in the vicinity of the pixel edge and also in the vicinity of the trunk portion **512a.** The shift amount in the vicinity of the pixel edge is larger than the shift amount in the vicinity of the trunk portion **512a.** In the example of FIG. **26****,** the maximum shift amount in the vicinity of the trunk portion **512a** is +20°, whereas the maximum shift amount in the vicinity of the pixel edge is -35°. An area in which the shift amount is 5° or greater is about 5 µm in the vicinity of the trunk portion **512a,** whereas such an area is about 11 µm in the vicinity of the pixel edge. From this, it is understood that the influence of the azimuthal angle shift in the vicinity of the pixel edge is exerted more internally into the liquid crystal domains of the 4D structure. Accordingly, by suppressing the occurrence of the azimuthal angle shift in the vicinity of the pixel edge, the reduction of the transmittance and the deterioration of the viewing angle dependence of the γ characteristic can be effectively prevented.

The present invention, made in the above-described problem, has an object of suppressing the occurrence of an azimuthal angle shift in the vicinity of the pixel edge in a liquid crystal display device using pixel electrodes having a fishbone structure as well as the PSA technology.

### SOLUTION TO PROBLEM

A liquid crystal display device according to the present invention is a liquid crystal display device including a plurality of pixels and a pair of polarizing plates located in crossed Nicols and providing display in a normally black mode. Each of the plurality of pixels includes a liquid crystal layer containing liquid crystal molecules having a negative dielectric anisotropy; a pixel electrode and a counter electrode facing each other with the liquid crystal layer interposed therebetween; a pair of vertical alignment films respectively provided between the pixel electrode and the liquid crystal layer and between the counter electrode and the liquid crystal layer; and a pair of alignment sustaining layers respectively provided on surfaces of the pair of vertical alignment films on the liquid crystal layer side and formed of a photopolymerizable material. The pixel electrode includes a cross-shaped trunk portion located so as to overlap polarization axes of the pair of polarizing plates, a plurality of branch portions extending from the trunk portion in a direction having an angle of about 45° with respect thereto, and a plurality of slits formed between the plurality of branch portions; the pixel electrode has an overall shape which is a generally parallelogram shape with four right angles, each of four sides of which has an angle of about 45° with respect to the polarization axes of the pair of polarizing plates; and the plurality of branch portions are located generally symmetrically with respect to the trunk portion.

In a preferable embodiment, the liquid crystal display device according to the present invention includes a first substrate including the pixel electrode and a second substrate including the counter electrode. The first substrate further includes a switching element electrically connected to the pixel electrode, a scanning line for supplying a scanning signal to the switching element, and a signal line for supplying an image signal to the switching element; and at least one of the scanning line and the signal line extends in a direction having an angle of about 45° with respect to the polarization axes of the pair of polarizing plates, and is located between the pixel electrodes adjacent to each other.

In a preferable embodiment, both of the scanning line and the signal line extend in a direction having an angle of about 45° with respect to the polarization axes of the pair of polarizing plates, and are located between the pixel electrodes adjacent to each other.

In a preferable embodiment, the liquid crystal display device according to the present invention includes a first substrate including the pixel electrode and a second substrate including the counter electrode. The first substrate further includes a switching element electrically connected to the pixel electrode, a scanning line for supplying a scanning signal to the switching element, and a signal line for supplying an image signal to the switching element; and at least one of the scanning line and the signal line extends in a direction generally parallel to, or generally perpendicular to, the polarization axis of one of the pair of polarizing plates, and is located so as to overlap the trunk portion of the pixel electrode.

In a preferable embodiment, both of the scanning line and the signal line extend in a direction generally parallel to, or generally perpendicular to, the polarization axis of one of the pair of polarizing plates, and are located so as to overlap the trunk portion of the pixel electrode.

In a preferable embodiment, the first substrate further includes a storage capacitance line; and the storage capacitance line includes a first portion extending in a direction having an angle of about 45° with respect to the polarization axes of the pair of polarizing plates and a second portion extending in a direction generally perpendicular to the first portion, and is located between the pixel electrodes adjacent to each other.

In a preferable embodiment, one of the scanning line and the signal line extends in a direction generally parallel to, or generally perpendicular to, the polarization axis of one of the pair of polarizing plates, and is located so as to overlap the trunk portion of the pixel electrode; and the other of the scanning line and the signal line includes a first portion extending in a direction having an angle of about 45° with respect to the polarization axes of the pair of polarizing plates and a second portion extending in a direction generally perpendicular to the first portion, and is located between the pixel electrodes adjacent to each other.

In a preferable embodiment, the first substrate further includes a storage capacitance line; the signal line extends in a direction generally parallel to, or generally perpendicular to, the polarization axis of one of the pair of polarizing plates, and is located so as to overlap the trunk portion of the pixel electrode; the scanning line includes a first portion extending in a direction having an angle of about 45° with respect to the polarization axes of the pair of polarizing plates and a second portion extending in a direction generally perpendicular to the first portion, and is located between the pixel electrodes adjacent to each other; and the storage capacitance line extends in a direction generally perpendicular to the signal line, and is located so as to overlap the trunk portion of the pixel electrode.

In a preferable embodiment, the first substrate further includes a storage capacitance line and a storage capacitance electrode electrically connected to the storage capacitance line; and the storage capacitance electrode is cross-shaped and is located so as to overlap the trunk portion.

In a preferable embodiment, at least one of the storage capacitance line and the storage capacitance electrode is formed of a transparent conductive material.

In a preferable embodiment, both of the storage capacitance line and the storage capacitance electrode are formed of a transparent conductive material.

In a preferable embodiment, circular polarization is incident on the liquid crystal layer, and display is provided by the liquid crystal layer modifying the circular polarization.

In a preferable embodiment, the liquid crystal display device according to the present invention includes a first phase plate located between one of the pair of polarizing plates and the liquid crystal layer, and a second phase plate located between the other of the pair of polarizing plates and the liquid crystal layer.

In a preferable embodiment, the first phase plate is a λ/4 plate having a delay axis which has an angle of about 45° with respect to the polarization axis of the one of the pair of polarization axes; and the second phase plate is a λ/4 plate having a delay axis generally perpendicular to the delay axis of the first phase plate.

In a preferable embodiment, when a voltage is applied between the pixel electrode and the counter electrode, four liquid crystal domains are formed in the liquid crystal layer in each of the plurality of pixels; four directors respectively representative of alignment directions of the liquid crystal molecules in the four liquid crystal domains have different azimuths from one another; and each of the azimuths of the four directors has an angle of about 45° with respect to the polarization axes of the pair of polarizing plates.

In a preferable embodiment, the four liquid crystal domains are a first liquid crystal domain in which the azimuth of the director is a first azimuth, a second liquid crystal domain in which the azimuth of the director is a second azimuth, a third liquid crystal domain in which the azimuth of the director is a third azimuth, and a fourth liquid crystal domain in which the azimuth of the director is a fourth azimuth; and a difference between any two azimuths among the first azimuth, the second azimuth, the third azimuth and the fourth azimuth is approximately equal to an integral multiple of 90°; and the azimuths of the directors of the liquid crystal domains adjacent to each other with the trunk portion interposed therebetween are different from each other by about 90°.

### ADVANTAGEOUS EFFECTS OF INVENTION

According to the present invention, in a liquid crystal display device using pixel electrodes having a fishbone structure as well as the PSA technology, the occurrence of an azimuthal angle shift in the vicinity of the pixel edge can be suppressed.

### BRIEF DESCRIPTION OF DRAWINGS

[FIG. 1] FIGS. **1(a)** and **(b)** schematically show a liquid crystal display device **100** in a preferable embodiment according to the present invention; FIG. **1(a)** is a plan view, and FIG. **1(b)** is a cross-sectional view taken along line **1B-1B'** in FIG. **1(a)****.**
[FIG. 2] FIG. **2** is a plan view schematically showing a pixel electrode **12** included in the liquid crystal display device **100.**
[FIG. 3] FIG. **3** schematically shows alignment of liquid crystal molecules **41** in the vicinity of the pixel edge in the liquid crystal display device **100.**
[FIG. 4] FIG. **4** is a graph showing the relationship between the distance X (µm) from the pixel edge and the alignment azimuth ϕ(°) of the liquid crystal molecules **41.**
[FIG. 5] FIG. **5(a)** is a graph showing the relationship between the display gray scale and the transmission intensity (γ characteristic) in a conventional liquid crystal display device **500,** and FIG. **5(b)** is a graph showing the relationship between the display gray scale and the transmission intensity (γ characteristic) in the liquid crystal display device **100.**
[FIG. 6] FIGS. **6(a)** and **(b)** are plan views schematically showing the liquid crystal display device **100.**
[FIG. 7] FIG. **7** schematically shows the alignment azimuths in the case where the azimuthal angle shift does not occur.
[FIG. 8] FIG. **8** schematically shows the alignment azimuths in the case where the azimuthal angle shift occurs uniformly in the vicinity of a trunk portion **12a** of the pixel electrode **12.**
[FIG. 9] FIG. **9** schematically shows the alignment azimuths in the case where the azimuthal angle shift occurs nonuniformly in the vicinity of the trunk portion **12a** of the pixel electrode **12.**
[FIG. 10] FIG. **10** is a graph showing the γ characteristic assumed from the alignment state shown in FIG. **7****.**
[FIG. 11] FIG. **11** is a graph showing the γ characteristic assumed from the alignment state shown in FIG. **8****.**
[FIG. 12] FIG. **12** is a graph showing the γ characteristic assumed from the alignment state shown in FIG. **9****.**
[FIG. 13] FIGS. **13(a)** and **(b)** schematically show the liquid crystal display device **100;** FIG. **13(a)** is a plan view, and FIG. **13(b)** is a cross-sectional view taken along line **13B-13B'** in FIG. **13(a)****.**
[FIG. 14] FIGS. **14(a)** and **(b)** schematically show the liquid crystal display device **100;** FIG. **14(a)** is a plan view, and FIG. **14(b)** is a cross-sectional view taken along line **14B-14B'** in FIG. **14(a)****.**
[FIG. 15] FIGS. **15(a)** and **(b)** schematically show a liquid crystal display device **200** in a preferable embodiment according to the present invention; FIG. **15(a)** is a plan view, and FIG. **15(b)** is a cross-sectional view taken along line **15B-15B'** in FIG. **15(a)****.**
[FIG. 16] FIGS. **16(a)** and **(b)** schematically show the liquid crystal display device **200;** FIG. **16(a)** is a plan view, and FIG. **16(b)** is a cross-sectional view taken along line **16B-16B'** in FIG. **16(a)****.**
[FIG. 17] FIGS. **17(a)** and **(b)** schematically show the liquid crystal display device **200;** FIG. **17(a)** is a plan view, and FIG. **17(b)** is a cross-sectional view taken along line **17B-17B'** in FIG. **17(a)****.**
[FIG. 18] FIGS. **18(a)** and **(b)** schematically show a liquid crystal display device **300** in a preferable embodiment according to the present invention; FIG. **18(a)** is a plan view, and FIG. **18(b)** is a cross-sectional view taken along line **18B-18B'** in FIG. **18(a)****.**
[FIG. 19] FIG. **19(a)** schematically shows a cross-sectional structure of the liquid crystal display devices **100** through **300,** and FIGS. **19(b)** and **(c)** each schematically show a polarization state of light passing the inside of the liquid crystal display devices **100** through **300;** FIG. **19(b)** corresponds to a black display state (in the absence of a voltage), and FIG. **19(c)** corresponds to a white display state (in the presence of a voltage).
[FIG. 20] FIG. **20(a)** schematically shows a liquid crystal display devices **400** in a preferable embodiment according to the present invention, and FIGS. **20(b)** and **(c)** each schematically show a polarization state of light passing the inside of the liquid crystal display device **400;** FIG. **20(b)** corresponds to a black display state (in the absence of a voltage), and FIG. **20 (c)** corresponds to a white display state (in the presence of a voltage).
[FIG. 21] FIG. **21** shows the transmission characteristic of one pixel in the liquid crystal display device **100** (adopting a structure using linear polarization) in the presence of a voltage.
[FIG. 22] FIG. **22** shows the transmission characteristic of one pixel in the liquid crystal display device **400** (adopting a structure using circular polarization) in the presence of a voltage.
[FIG. 23] FIG. **23** is a plan view schematically showing the conventional liquid crystal display device **500** including pixel electrodes **512** having a fishbone structure.
[FIG. 24] FIG. **24** schematically shows the relationship between the fishbone structure of the pixel electrodes **512** and the azimuths of directors of liquid crystal domains.
[FIG. 25] FIG. **25(a)** is a microphotograph showing one pixel in the liquid crystal display device **500** in the presence of a voltage; and FIG. **25(b)** is taken after polarization axes **P1** and **P2** in FIG. **25(a)** are rotated by 45°.
[FIG. 26] FIG. **26** is a graph showing the relationship between the distance X (µm) from the pixel edge and the alignment azimuth ϕ(°) of the liquid crystal molecules.
[FIG. 27] FIG. **27** shows the alignment azimuths of liquid crystal molecules **541a** in the vicinity of the pixel edge, liquid crystal molecules **541b** in the vicinity of the trunk portion, and liquid crystal molecules **541c** located in an intermediate area therebetween.
[FIG. 28] FIG. **28** shows the alignment azimuths of the liquid crystal molecules **541a** in the vicinity of the pixel edge, the liquid crystal molecules **541b** in the vicinity of the trunk portion, and the liquid crystal molecules **541c** located in the intermediate area therebetween.

### DESCRIPTION OF EMBODIMENTS

Hereinafter, the present invention will be described by way of embodiments with reference to the drawings. The present invention is not limited to the following embodiments.

### (EMBODIMENT 1)

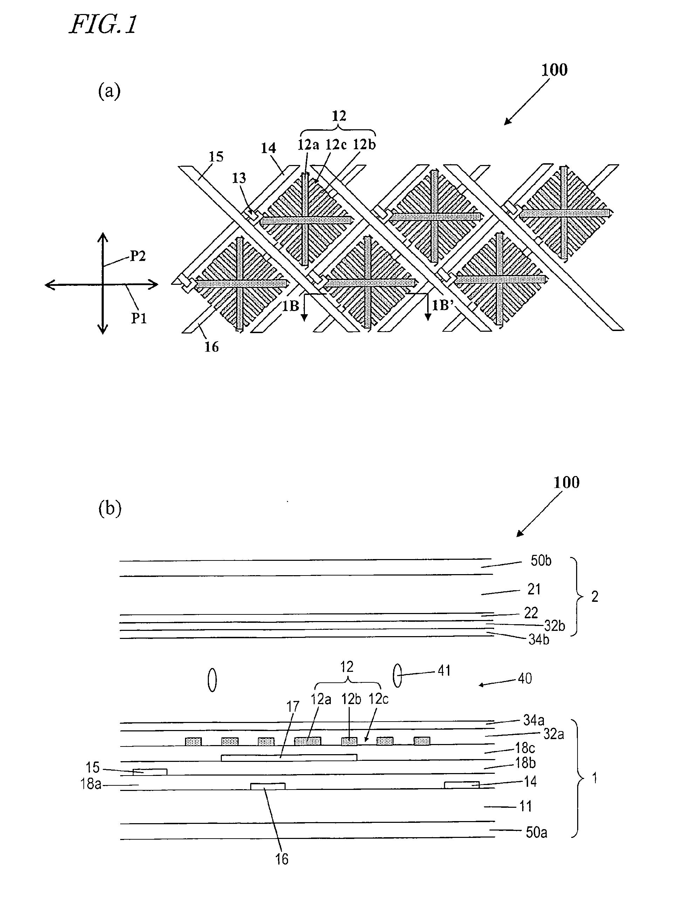

FIGS. **1(a)** and **(b)** show a liquid crystal display device **100** in this embodiment. FIG. **1(a)** is a plan view schematically showing the liquid crystal display device **100,** and FIG. **1(b)** is a cross-sectional view taken along line **1B-1B'** in FIG. **1(a)****.**

The liquid crystal display device **100** includes a plurality of pixels and a pair of polarizing plates **50a** and **50b** located in crossed Nicols, and provides display in a normally black mode.

Each of the plurality of pixels in the liquid crystal display device **100** includes a liquid crystal layer **40,** and a pixel electrode **12** and a counter electrode **22** facing each other with the liquid crystal layer **40** interposed therebetween. The liquid crystal layer **40** contains liquid crystal molecules **41** having a negative dielectric anisotropy. The pixel electrode **12** has a fishbone structure (minute striped pattern) as described later.

A pair of vertical alignment films **32a** and **32b** are provided respectively between the pixel electrode **12** and the liquid crystal layer **40** and between the counter electrode **22** and the liquid crystal layer **40.** On surfaces of the vertical alignment films **32a** and **32b** on the liquid crystal layer **40** side, a pair of alignment sustaining layers **34a** and **34b** formed of a photopolymerizable material are provided.

The alignment sustaining layers **34a** and **34b** are formed by, after forming a liquid crystal cell, polymerizing the photopolymerizable compound (typically, a photopolymerizable monomer) mixed in a liquid crystal material in advance in the state where the liquid crystal layer **40** is supplied with a voltage. The alignment of the liquid crystal molecules **41** contained in the liquid crystal layer **40** is regulated by the vertical alignment films **32a** and **32b** until the photopolymerizable compound is polymerized. When a sufficiently high voltage (e.g., white display voltage) is applied to the liquid crystal layer **40,** the liquid crystal molecules **41** are inclined in prescribed azimuths by oblique electric fields generated by the fishbone structure of the pixel electrode **12.** The alignment sustaining layers **34a** and **34b** act to maintain (store) the alignment of the liquid crystal molecules **41** realized in the state where the liquid crystal layer **40** is provided with a voltage, even after the voltage is removed (in the absence of a voltage). Accordingly, the pretilt azimuths of the liquid crystal molecules **41** (azimuths in which the liquid crystal molecules **41** are inclined in the absence of a voltage) defined by the alignment sustaining layers **34a** and **34b** match the azimuths in which the liquid crystal molecules **41** are inclined in the presence of a voltage.

The liquid crystal display device **100** includes an active matrix substrate (hereinafter, referred to as the "TFT substrate") **1** including the pixel electrodes **12,** and a counter substrate (hereinafter, referred to as the "color filter substrate") **2** including the counter electrode **22.**

The TFT substrate **1** includes, in addition to the pixel electrodes **12,** a transparent plate (e.g., a glass plate or a plastic plate) **11,** thin film transistors (TFTs) **13** as switching elements electrically connected to the pixel electrodes **12,** scanning lines **14** for supplying a scanning signal to the TFTs **13,** and signal lines **15** for supplying an image signal to the TFTs **13.** The TFT substrate **1** further includes storage capacitance lines **16** and storage capacitance electrodes **17** electrically connected to the storage capacitance lines **16.**

The scanning lines **14** and the storage capacitance lines **16** are formed on a surface of the transparent plate **11** on the liquid crystal layer **40** side. A first insulating layer **18a** is formed so as to cover the scanning lines **14** and the storage capacitance lines **16.** On the first insulating layer **18a,** a semiconductor layer (not shown) acting as channel regions, source regions and drain regions of the TFTs **13** and the signal lines **15** are formed. A second insulating layer **18b** is formed so as to cover the signal lines **15** and the like. On the second insulating layer **18b,** the storage capacitance electrodes **17** are formed. A third insulating layer **18c** is formed so as to cover the storage capacitance electrodes **17.** On the third insulating layer **18c,** the pixel electrodes **12** are formed. On a surface of the transparent plate **11** opposite to the liquid crystal layer **40,** the polarizing plate **50a** is provided.

The counter substrate **2** includes, in addition to the counter electrode **22,** a transparent plate (e.g., a glass plate or a plastic plate) **21** and color filters (not shown). The counter electrode **22** is formed on a surface of the transparent plate **21** on the liquid crystal layer **40** side. On a surface of the transparent plate **21** opposite to the liquid crystal layer **40,** the polarizing plate **50b** is provided.

As described above, the pair of polarizing plates **50a** and **50b** are located in crossed Nicols. Namely, as shown in FIG. **1(a)****,** the polarization axis (transmission axis) **P1** of the polarizing plate **50a** and the polarization axis (transmission axis) **P2** of the polarizing plate **50b** are perpendicular to each other.

In the liquid crystal display device **100** in this embodiment, each pixel electrode **12** includes a cross-shaped trunk portion **12a** located so as to overlap the polarization axes **P1** and **P2** of the pair of polarizing plates **50a** and **50b,** a plurality of branch portions **12b** extending from the trunk portion **12a** in a direction having an angle of about 45° with respect thereto, and a plurality of slits **12c** formed between the plurality of branch portions **12b.** In the liquid crystal display device **100,** each pixel electrode **12** has a fishbone structure (minute striped pattern) as described above, and thus is divided into domains of different alignment directions. Namely, when a voltage is applied between the pixel electrode **12** and the counter electrode **22,** four (four types of) liquid crystal domains are formed in the liquid crystal layer **40** in each pixel. Four directors respectively representative of the alignment directions of the liquid crystal molecules **41** contained in the four liquid crystal domains have different azimuths from each other. Therefore, the azimuthal angle dependence of the viewing angle is lowered, and a display of a wide viewing angle is realized.

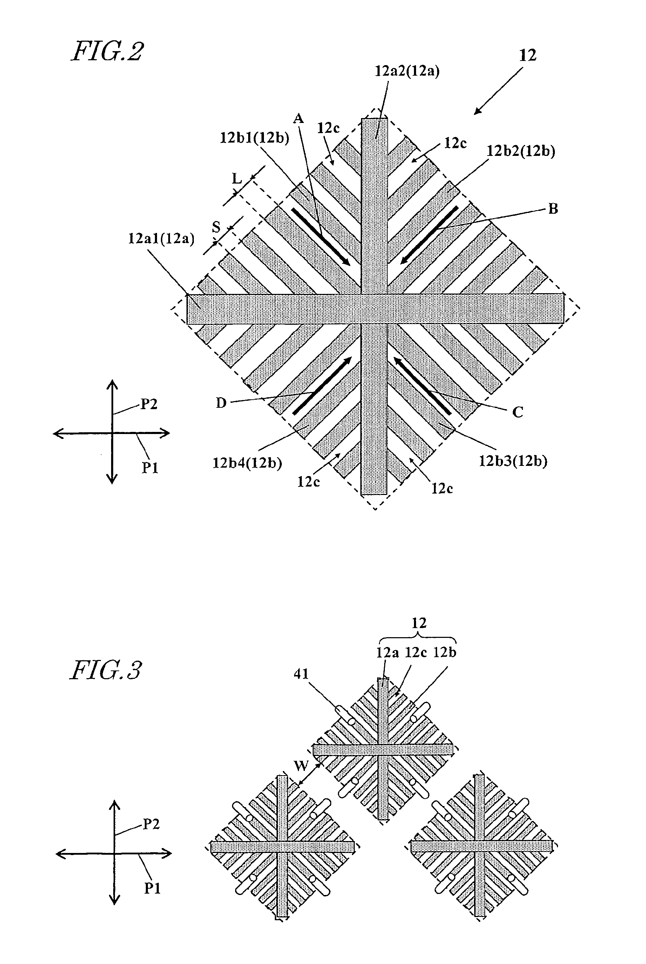

Hereinafter, with reference also to FIG. **2****,** a more detailed structure of the pixel electrode **12,** and the relationship between the structure and the azimuths of the directors in the liquid crystal domains, will be described. FIG. **2** is a plan view showing one pixel electrode in enlargement.

The trunk portion **12a** of the pixel electrode **12** includes a linear portion (horizontal linear portion) **12a1** extending in a horizontal direction and a linear portion (vertical linear portion) **12a2** extending in a vertical direction. The horizontal linear portion **12a1** and the vertical linear portion **12a2** cross each other (perpendicularly) at the center of the pixel.

The plurality of branch portions **12b** are divided into four groups corresponding to four areas separated from each other by the cross-shaped trunk portion **12a.** It is now assumed that the display plane is the face of a clock, that the azimuthal angle of 0° corresponds to the 9 o'clock direction, and that the clockwise direction is a forward direction. With such assumptions, the plurality of branch portions **12b** are divided into a first group of branch portions **12b1** extending in an azimuthal angle direction of 45°, a second group of branch portions **12b2** extending in an azimuthal angle direction of 135°, a third group of branch portions **12b3** extending in an azimuthal angle direction of 225°, and a fourth group of branch portions **12b4** extending in an azimuthal angle direction of 315°.

In each of the first group, the second group, the third group and the fourth group, width **L** of each of the plurality of branch portions **12b** and gap S between the branch portions **12b** adjacent to each other are typically 1.5 µm or greater and 5.0 µm or less. From the viewpoints of stability of the liquid crystal molecules **41** and the luminance, it is preferable that the width **L** and the gap S of the branch portion **12b** are within the above-mentioned range.

The plurality of slits **12c** each extend in the same direction as the branch portion **12b** adjacent thereto. Specifically, the slits **12c** between the branch portions **12b1** of the first group extend in the azimuthal angle direction of 45°, and the slits **12c** between the branch portions **12b2** of the second group extend in the azimuthal angle direction of 135°. The slits **12c** between the branch portions **12b3** of the third group extend in the azimuthal angle direction of 225°, and the slits **12c** between the branch portions **12b4** of the fourth group extend in the azimuthal angle direction of 315°.

In the presence of a voltage, an oblique electric field generated in each slit (i.e., an area of the pixel electrode **12** where a conductive film does not exist) **12c** defines the azimuth in which the liquid crystal molecules **41** are inclined (azimuthal angle component of a longer axis of the liquid crystal molecules **41** inclined by the electric field). This azimuth is parallel to the branch portions **12b** (i.e., parallel to the slits **12c**) and is directed to the trunk portion **12a** (i.e., different by 180° from an azimuth in which the branch portions **12b** extend). Specifically, the azimuthal angle of the inclining azimuth defined by the branch portions **12b1** of the first group (first azimuth: arrow **A**) is about 225°. The azimuthal angle of the inclining azimuth defined by the branch portions **12b2** of the second group (second azimuth: arrow **B**) is about 315°. The azimuthal angle of the inclining azimuth defined by the branch portions **12b3** of the third group (third azimuth: arrow **C**) is about 45°. The azimuthal angle of the inclining azimuth defined by the branch portions **12b4** of the fourth group (fourth azimuth: arrow **D**) is about 135°. The above-mentioned four azimuths **A** through **D** are the azimuths of the directors of the liquid crystal domains in the 4D structure, which is formed when a voltage is applied. The azimuths **A** through **D** are generally parallel to any one of the plurality of branch portions **12b** and have an angle of about 45° with respect to the polarization axes **P1** and **P2** of the pair of polarizing plates **50a** and **50b.** A difference between any two azimuths among the azimuths **A** through **D** is approximately equal to an integral multiple of 90°, and the azimuths of the directors of the liquid crystal domains adjacent to each other with the trunk portion **12a** interposed therebetween (e.g., the azimuths **A** and **B**) are different from each other by about 90°.

The liquid crystal display device **100** in this embodiment has a feature in the overall shape of the pixel electrode **12** including the trunk portion **12a,** the branch portions **12b** and the slits **12c.** As shown in FIG. **1(a)** and FIG. **2****,** the overall shape of the pixel electrode **12** is a generally parallelogram shape with four right angles (more specifically, a generally square shape), each of four sides of which has an angle of about 45° with respect to the polarization axes **P1** and **P2** of the pair of polarizing plates **50a** and **50b.** Namely, each of the sides defining the external shape of the pixel electrode **12** has an angle of about 45° with respect to the polarization axes **P1** and **P2.** The plurality of branch portions **12b** are located generally symmetrically with respect to the trunk portion **12a.**

By contrast, as shown in FIG. **23** and FIG. **24****,** the overall shape of the pixel electrode **512** in the conventional liquid crystal display device **500** is a generally parallelogram shape with four right angles, each of four sides of which is generally parallel to, or generally perpendicular to, the polarization axes **P1** and **P2.** Namely, each of the sides defining the external shape of the pixel electrode **512** is generally parallel to, or generally perpendicular to, the polarization axes **P1** and **P2.**

The liquid crystal display device **100** also has a feature in the locations of the lines including the scanning lines **14.** As shown in FIG. **1(a)****,** the scanning lines **14** and the signal lines **15** extend in a direction having an angle of about 45° with respect to the polarization axes **P1** and **P2** of the pair of polarizing plates **50a** and **50b,** and are each located between the pixel electrodes **12** adjacent to each other. The storage capacitance lines **16** also extend in a direction having an angle of about 45° with respect to the polarization axes **P1** and **P2.** However, the storage capacitance lines **16** are each located so as to pass the center of the pixel, instead of between the pixel electrode **12** adjacent to each other.

By contrast, as shown in FIG. **23****,** the scanning lines **514** and the signal lines **515** in the conventional liquid crystal display device **500** extend in a direction generally parallel to, or generally perpendicular to, the polarization axes **P1** and **P2.**

As described above, in the liquid crystal display device **100** in this embodiment, each of the sides defining the external shape of the pixel electrode **12** has an angle of about 45° with respect to the polarization axes **P1** and **P2.** Therefore, a gap between one pixel electrode **12** and another pixel electrode **12** adjacent thereto extends in a direction having an angle of about 45° with respect to the polarization axes **P1** and **P2.** Accordingly, as shown in FIG. **3****,** the liquid crystal molecules **41** in the vicinity of the pixel edge are aligned, by the oblique electric fields generated in the gaps, in directions perpendicular to the directions in which the gaps extend, namely, in azimuthal angle directions of 45°, 135°, 225° and 315°. Namely, the liquid crystal molecules **41** in the vicinity of the pixel edge are aligned in the same azimuth as the azimuths **A** through **D** of the directions of the liquid crystal domains. Hence, the occurrence of the azimuthal angle shift in the vicinity of the pixel edge is suppressed, and as a result, the reduction of the transmittance and the deterioration of the viewing angle dependence of the γ characteristic are suppressed.

In the liquid crystal display device **100** in this embodiment, the scanning lines **14** and the signal lines **15** extend in a direction having an angle of about 45° with respect to the polarization axes **P1** and **P2,** and are each located between the pixel electrodes **12** adjacent to each other. Namely, the scanning lines **14** and the signal lines **15** are located so as not to overlap the pixel electrodes **12.** The scanning lines **14** and the signal lines **15** are typically formed of an opaque metal material, but owing to the above-described locations of the scanning lines **14** and the signal lines **15,** the loss of the transmittance caused by the scanning lines **14** and the signal lines **15** is reduced. The alignment caused by the electric fields which is generated by the fishbone structure is suppressed owing to the above-mentioned locations from being disturbed by electric fields leaking from the scanning lines **14** and the signal lines **15.**

Width **W** of a gap portion between one pixel electrode **12** and another pixel electrode **12** adjacent thereto (i.e., the gap between two adjacent pixel electrodes **12,** see FIG. **3**) is typically 3.0 µm or greater and 10 µm or less. From the viewpoints of stability of the liquid crystal molecules **41** and the luminance, it is preferable that the width **W** is within the above-mentioned range.

The effect of suppressing the azimuthal angle shift provided by the liquid crystal display device **100** in this embodiment was investigated. The results will be described, hereinafter.

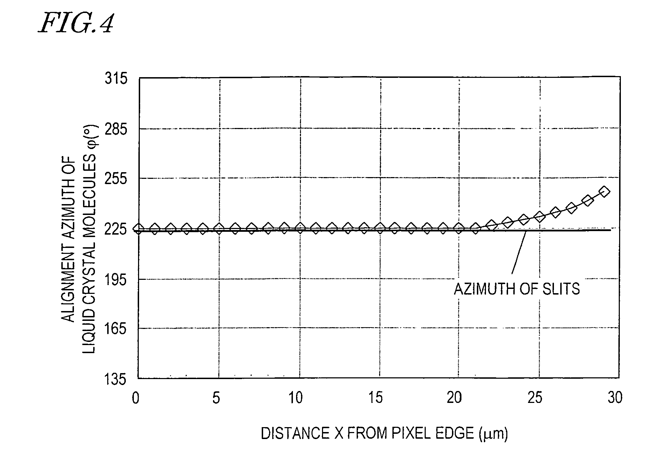

FIG. **4** shows the relationship between the distance X (µm) from the pixel edge and the alignment azimuth ϕ(°) of the liquid crystal molecules **41** in the liquid crystal display device **100** in this embodiment. FIG. **4** shows the alignment profile of the upper left area of the pixel (area in which the branch portions **12b1** of the first group are located), which was found by calculations. In the example shown in FIG. **4****,** the size of one pixel is 60 µm × 60 µm. Namely, the distance X is 30 µm at the center of the pixel. The width **L** of each of the plurality of branch portions **12b** is 3.0 µm, and the gap **S** between two adjacent branch portions **12b** is 3.0 µm. The width **W** of the gap portion is 8.0 µm.

As can be seen from FIG. **4****,** in the vicinity of the pixel edge (X = 0 µm) the alignment azimuth of the liquid crystal molecules **41** is 225°. This azimuth is parallel to the slits **12c** and is directed to the trunk portion **12a** (i.e., different by 180° from an azimuth in which the branch portions **12b1** extend). Namely, the alignment azimuth ϕ) of the liquid crystal molecules **41** in the vicinity of the pixel edge is the same as the azimuth **A** of the director of the liquid crystal domain formed in this area. As can be seen, in the liquid crystal display device **100**, the azimuthal angle shift in the vicinity of the pixel edge (significant shift toward the horizontal azimuth, i.e., toward the azimuthal angle direction of 180° as shown in FIG. **26**) is suppressed.

Regarding the liquid crystal display device **100** in this embodiment and the conventional liquid crystal display device **500** shown in FIG. **23****,** the transmittance of the pixels was found by calculations and compared. For the calculations, the size of one pixel was set to 60 µm × 60 µm in both of the liquid crystal display devices **100** and **500.** Assuming that the pixel electrodes **12** and **512** are formed of a transparent oxidized metal material such as ITO, IZO or the like, the transmittance thereof was set to 100%. Assuming that the scanning lines **14** and **514** and the signal lines **15** and **515** are formed of a metal material such as Al, Mo or the like, the transmittance thereof was set to 0%. As a result of the calculations, it was found that the transmittance of the pixels of the liquid crystal display device **100** in this embodiment is about 30% higher than that of the conventional liquid crystal display device **500.** As can be seen, the transmittance can be significantly improved by suppression of the azimuthal angle shift in the vicinity of the pixel edge.

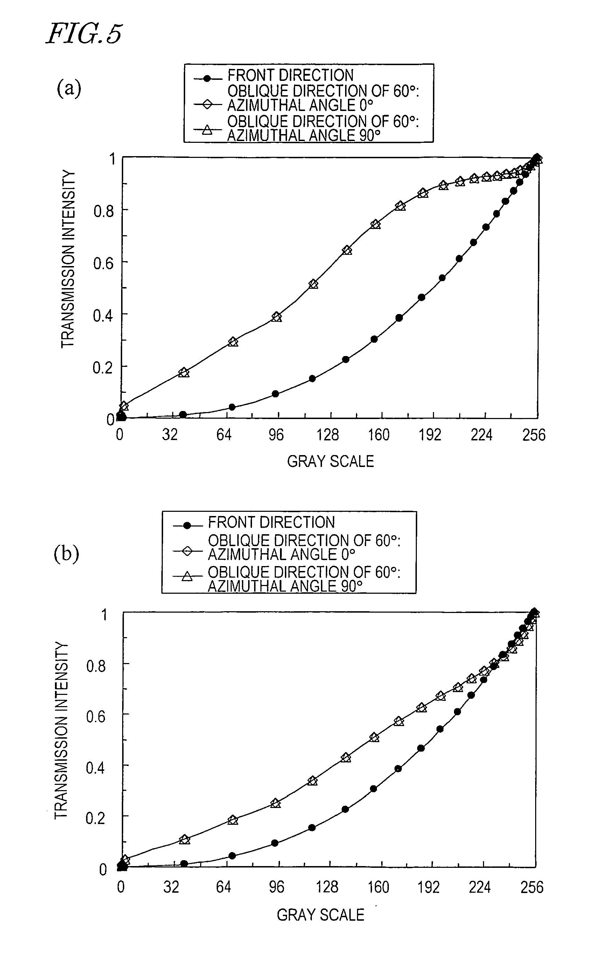

FIG. **5(a)** shows the relationship between the display gray scale and the transmission intensity (i.e., γ characteristic) of the conventional liquid crystal display device **500,** and FIG. **5(b)** shows the γ characteristic of the liquid crystal display device **100** in this embodiment. FIGS. **5(a)** and **(b)** show the γ characteristic provided when the display is observed from the front direction and the γ characteristic provided when the display is observed in an oblique direction of 60° at the azimuthal angle of 0° (horizontal azimuth) and at the azimuthal angle of 90° (vertical azimuth). Namely, FIGS. **5(a)** and **(b)** show the viewing angle dependence of the γ characteristic.

As shown in FIG. **5(a)****,** in the conventional liquid crystal display device **500,** a curve representing the γ characteristic provided when the display is observed in the oblique direction is significantly shifted upward as compared with a curve representing the γ characteristic provided when the display is observed from the front direction. Namely, when the display is observed in the oblique direction, the display luminance (corresponding to the transmission intensity) is significantly higher than the proper display luminance (display luminance provided when the display is observed from the front direction). Therefore, a phenomenon that the colors of the display are faded as a whole (washout or color shift) occurs when the display is observed in the oblique direction occurs.

By contrast, as shown in FIG. **5(b)****,** in the liquid crystal display device **100** in this embodiment, the shift amount of the γ characteristic provided when the display is observed in the oblique direction, with respect to the γ characteristic provided when the display is observed in the front direction, is smaller than that in the conventional liquid crystal display device **500,** and so the upward shift of the γ characteristic is suppressed. Accordingly, the occurrence of the washout (color shift) is suppressed when the display is observed in the oblique direction.

As described above, in the liquid crystal display device **100** in this embodiment, the occurrence of the azimuthal angle shift in the vicinity of the pixel edge is suppressed, and therefore, the reduction of the transmittance and the deterioration of the viewing angle dependence of the γ characteristic, which are caused by the azimuthal angle shift, are suppressed.

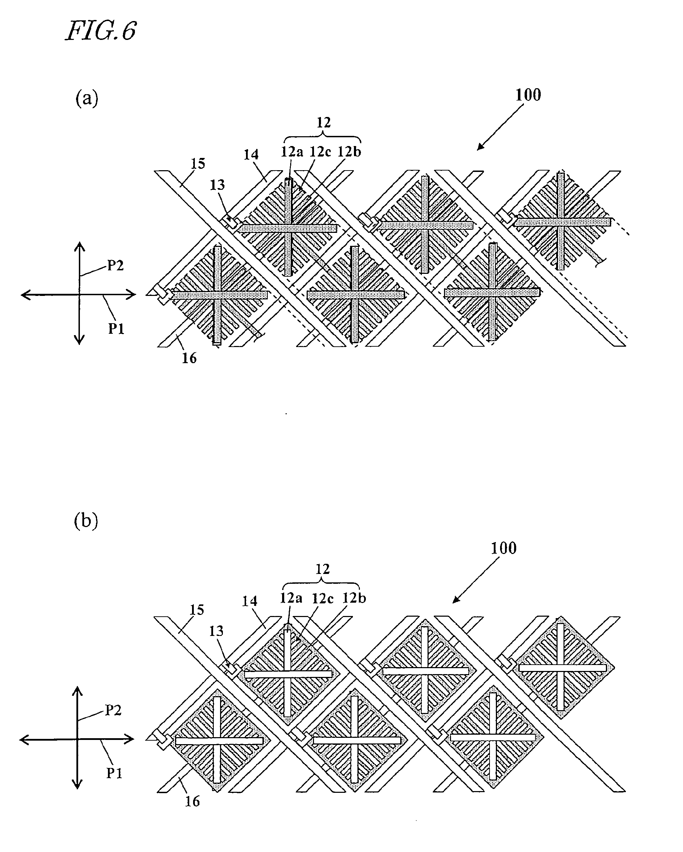

FIG. **1** and other figures show the pixel electrodes **12** having a generally square shape, but the overall shape of the pixel electrodes **12** is not limited to this. The pixel electrode **12** merely need to have a generally parallelogram shape with four right angles, each of four sides of which has an angle of about 45° with respect to the polarization axes **P1** and **P2.** For example, as shown in FIG. **6(a)****,** the pixel electrodes **12** may each have a generally rectangular shape including two generally square shapes connected to each other. The pixel electrodes **12** shown in FIG. **6(a)** each include two cross-shaped trunk portions **12a** and is generally rectangular as a whole. From each of the two trunk portions **12a,** a plurality of branch portions **12b** extend. One of the branch portions **12b** extending from one of the trunk portions **12a** and one of the branch portions **12b** extending from the other trunk portion **12a** are connected to each other. According to the structure shown in FIG. **1****,** the trunk portions **12a** are formed of a conductive film. Alternatively, as shown in FIG. **6(b)****,** the trunk portions **12a** may be deprived of the conductive film. Namely, the trunk portions **12a** may be cross-shaped slits. In the pixel electrodes **12** shown in FIG. **6(b)****,** the branch portions **12b** and the slits **12c** are located in an opposite manner from in the pixel electrodes **12** shown in FIG. **1****.** Namely, the pixel electrodes **12** shown in FIG. **6(b)** each have a pattern in which the conductive portions and the nonconductive portions are inverted from the pixel electrodes **12** shown in FIG. **1****.**

As described above, in the liquid crystal display device **100** in this embodiment, the azimuthal angle shift in the vicinity of the pixel edge is suppressed. However, as can be seen from in FIG. **4****,** the occurrence of the azimuthal angle shift in the vicinity of the trunk portion **12a** cannot be suppressed. Nonetheless, in the liquid crystal display device **100,** the plurality of branch portions **12b** are located generally symmetrically with respect to the trunk portion **12a** (i.e., generally line-symmetrically with respect to both of the horizontal linear portion **12a1** and the vertical linear portion **12a2** of the trunk portion **12a).** Where the plurality of branch portions **12b** are located in this manner (and so necessarily, the plurality of slits **12c** are located generally symmetrically with respect to the trunk portion **12a**), the azimuthal angle shift in the vicinity of the trunk portion **12a** occurs uniformly among the liquid crystal domains. Therefore, the adverse effect on the display quality can be suppressed. Hereinafter, this will be described more specifically.

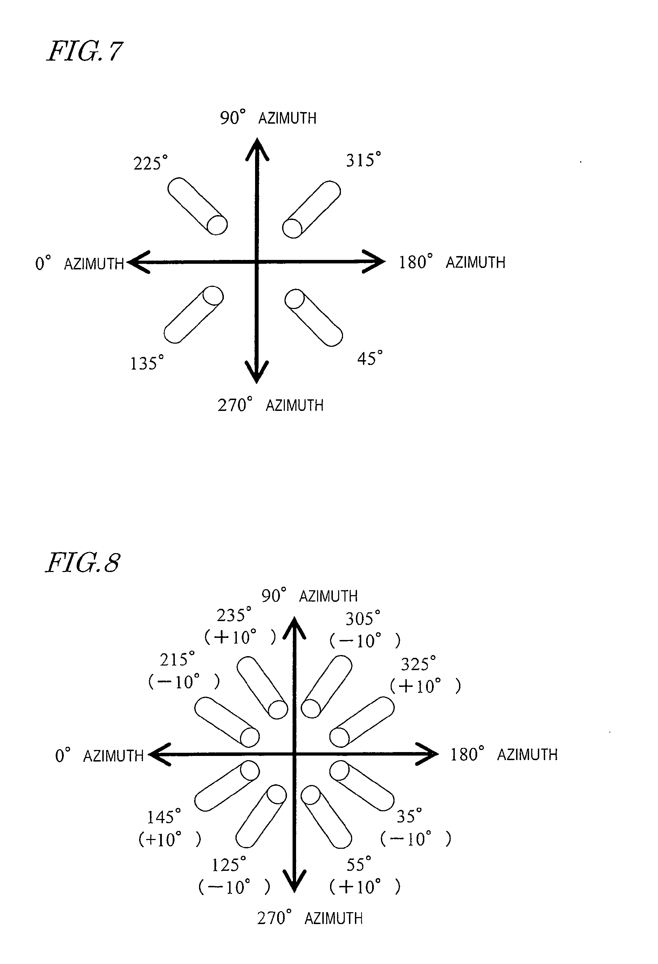

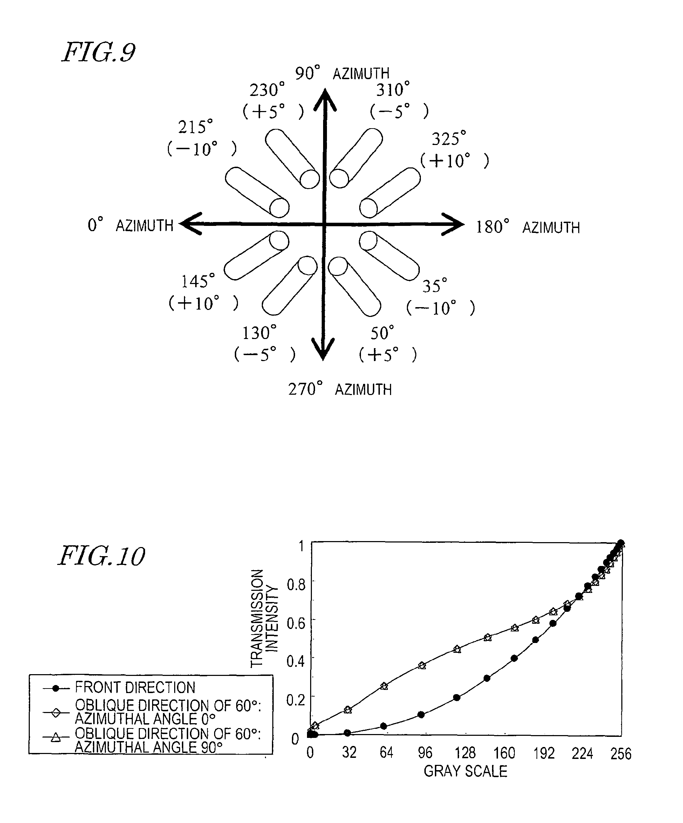

FIG. **7** schematically shows the alignment azimuths in the case where the azimuthal angle shift is assumed not to occur. FIG. **8** schematically shows the alignment azimuths in the case where the azimuthal angle shift occurs uniformly in the vicinity of the trunk portion **12a.** FIG. **9** schematically shows the alignment azimuths in the case where the azimuthal angle shift occurs nonuniformly in the vicinity of the trunk portion **12a.**

When the azimuthal angle shift does not occur, as shown in FIG. **7****,** the liquid crystal molecules in the four liquid crystal domains are aligned in the azimuthal angles of the directors, i.e., at 45°, 135°, 225° and 315°. By contrast, when the azimuthal angle shift occurs in the vicinity of the trunk portion **12a,** as shown in FIG. **8** and FIG. **9****,** the alignment azimuths in the vicinity of the trunk portion **12a** are shifted from the azimuthal angles of the directors of the respective liquid crystal domains. As shown in FIG. **8** and FIG. **9****,** in each of the liquid crystal domains, the alignment azimuth is shifted toward the horizontal azimuth in the vicinity of the horizontal linear portion **12a1** and toward the vertical azimuth in the vicinity of the vertical linear portion **12a2.**

In the liquid crystal display device **100** in this embodiment, the plurality of branch portions **12b** (and necessarily, the plurality of slits **12c**) are located generally symmetrically with respect to the trunk portion **12a** (at least in the vicinity of the trunk portion **12a**), and the occupying ratio of the branch portions **12b** (or the occupying ratio of the slits **12c**) in the vicinity of the horizontal linear portion **12a1** of the trunk portion **12a** is approximately equal to the occupying ratio of the branch portions **12b** (or the occupying ratio of the slits **12c**) in the vicinity of the vertical linear portion **12a2** of the trunk portion **12a.** Therefore, as shown in FIG. **8****,** in each liquid crystal domain, the magnitude of the azimuthal angle shift toward the horizontal azimuth is approximately equal to the magnitude of the azimuthal angle shift toward the vertical azimuth. Hence, the azimuthal angle shift (average value) in the vicinity of the trunk portion **12a** is approximately equal among the four liquid crystal domains. Thus, it is considered that the azimuthal angle shift occurs uniformly in the vicinity of the trunk portion **12a.**

By contrast, where the plurality of branch portions **12b** are located asymmetrically with respect to the trunk portion **12a,** as shown in FIG. **9****,** in each liquid crystal domain, the magnitude of the azimuthal angle shift toward the horizontal azimuth is different from the magnitude of the azimuthal angle shift toward the vertical azimuth. For example, where the occupying ratio of the branch portions **12b** (area size ratio with respect to the slits **12c)** in the vicinity of the horizontal linear portion **12a1** of the trunk portion **12a** is larger than the occupying ratio of the branch portions **12b** in the vicinity of the vertical linear portion **12a2** of the trunk portion **12a,** as shown in FIG. **9** as an example, the magnitude of the azimuthal angle shift toward the horizontal azimuth is larger than the magnitude of the azimuthal angle shift toward the vertical azimuth in the vicinity of the trunk portion **12a.** Hence, the azimuthal angle shift (average value) in the vicinity of the trunk portion **12a** is not uniform among the four liquid crystal domains. Thus, it is considered that the azimuthal angle shift occurs nonuniformly in the vicinity of the trunk portion **12a.**

FIG. **10****,** FIG. **11** and FIG. **12** show the γ characteristics assumed from the alignment states shown in FIG. **7,** FIG. **8** and FIG. **9****,** respectively. The γ characteristics were found by calculations.

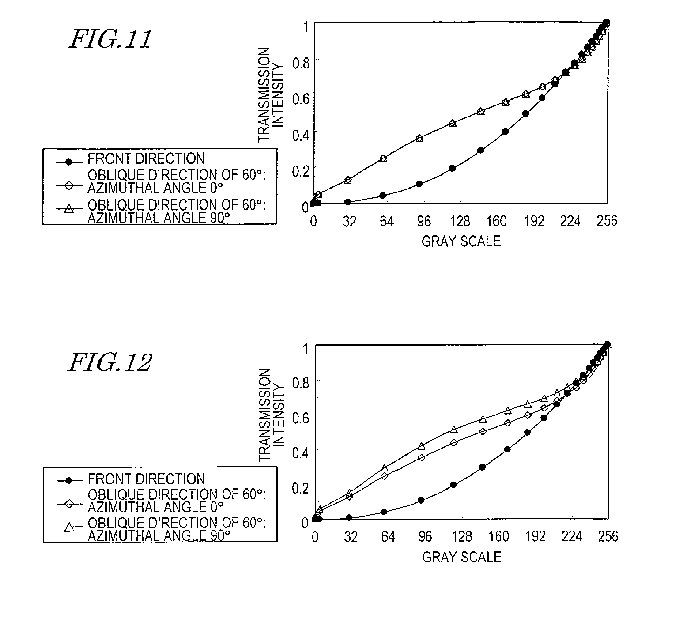

As can be seen from a comparison between FIG. **10** and FIG. **11****,** the γ characteristic when the azimuthal angle shift is uniform in the vicinity of the trunk portion **12a** (shown in FIG. **11****)** is approximately the same as the γ characteristic when the azimuthal angle shift does not occur (shown in FIG. **10****).** In this example, the calculations were made with the magnitude of the azimuthal angle shift in the vicinity of the trunk portion **12a** being 10°, but the magnitude of the azimuthal angle shift (absolute value) itself is not important. As long as the magnitude of the azimuthal angle shift toward the horizontal azimuth is approximately equal to the magnitude of the azimuthal angle shift toward the vertical azimuth in each of the four liquid crystal domains, the γ characteristic is compensated for in the pixel as a whole.

As can be seen from FIG. **12****,** when the azimuthal angle shift is nonuniform in the vicinity of the trunk portion **12a,** the γ characteristic is deteriorated at either the horizontal azimuth or the vertical azimuth (in FIG. **12****,** at the vertical azimuth). In this example, the calculations were made with the magnitude of the azimuthal angle shift toward the horizontal azimuth being 10° and the magnitude of the azimuthal angle shift toward the vertical azimuth being 5°, but the magnitude of the azimuthal angle shift itself is not important as described above regarding FIG. **11****.** When the magnitude of the azimuthal angle shift toward the horizontal azimuth is different from the magnitude of the azimuthal angle shift toward the vertical azimuth, the γ characteristic of the pixel as a whole is deteriorated at the azimuth toward which the magnitude of the azimuthal angle is smaller.

In this embodiment, both of the scanning lines **14** and the signal lines **15** extend between the pixel electrodes **12** adjacent to each other, in a direction having an angle of about 45° with respect to the polarization axes **P1** and **P2,** but the scanning lines **14** and the signal lines **15** do not need to be located in this manner. As long as at least either the scanning lines **14** or the signal lines **15** are located as described above, the loss of the transmittance and the alignment disturbance caused by the electric fields leaking from the lines can be suppressed. Needless to say, from the viewpoint of suppressing the loss of the transmittance and the alignment disturbance caused by the leaking electric fields more certainly, it is preferable that both of the scanning lines **14** and the signal lines **15** are located as described above.

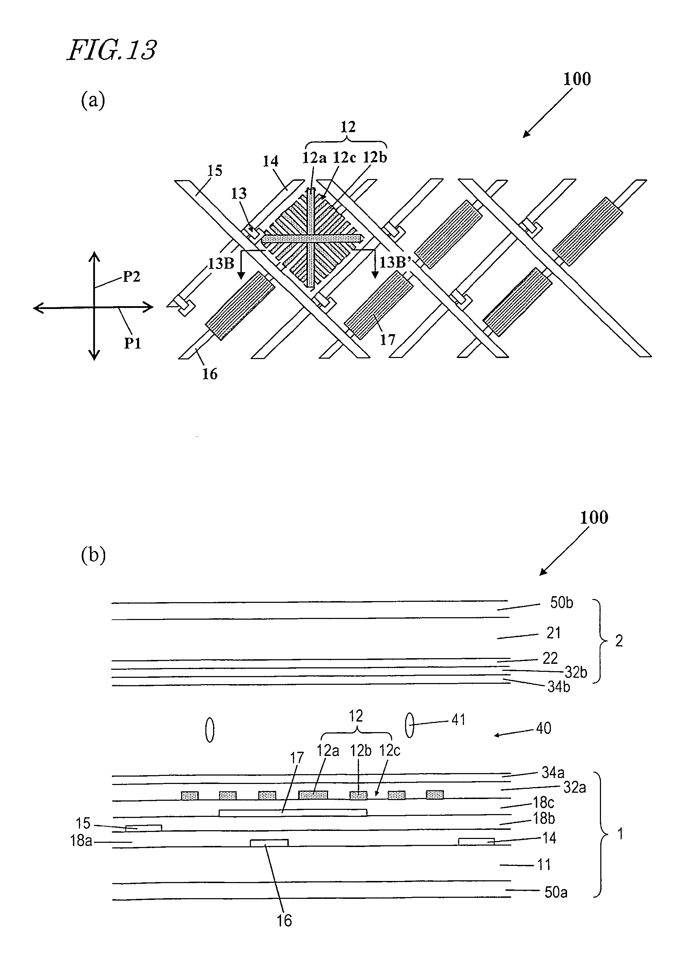

Now, a specific structure of the storage capacitance electrode **17** included in the liquid crystal display device **100** will be described. FIGS. **13(a)** and **(b)** show an example of structure of the storage capacitance electrodes **17.** In FIG. **13(a)****,** the pixel electrodes **12** are omitted except for one pixel so that the planar shape of the storage capacitance electrodes **17** can be seen easily.

As shown in FIG. **13(a)****,** the storage capacitance electrodes **17** each extend like a band in the same direction as the storage capacitance lines **16** (i.e., direction having an angle of about 45° with respect to the polarization axes **P1** and **P2).** As shown in FIG. **13(b)****,** each storage capacitance electrode **17** overlaps the trunk portion **12a** and the branch portions **12b** of the pixel electrode **12** with the third insulating layer **18c** interposed therebetween, and thus forms a storage capacitance.

In the example shown in FIGS. **13(a)** and **(b)**, the storage capacitance electrode **17** overlaps a part of the liquid crystal domains (areas in which the liquid crystal molecules **41** are aligned in a direction having an angle of about 45° with respect to the polarization axes **P1** and **P2** and significantly contribute to the transmittance). Therefore, in the case where the storage capacitance electrode **17** is formed of a metal material such as Al, Mo or the like, the loss of the transmittance is large. The storage capacitance electrode **17** also overlaps the slits **12c** in addition to the trunk portion **12a** and the branch portions **12b.** Therefore, when a driving method of applying a voltage to the storage capacitance electrode **17** in the step of PSA processing (step of polymerizing a photopolymerizable compound in the state where the liquid crystal layer **40** is supplied with a voltage, to form the alignment sustaining layers **34a** and **34b)** is adopted, the alignment realized by the fishbone structure may be disturbed by the electric fields leaking from the storage capacitance electrode **17.**

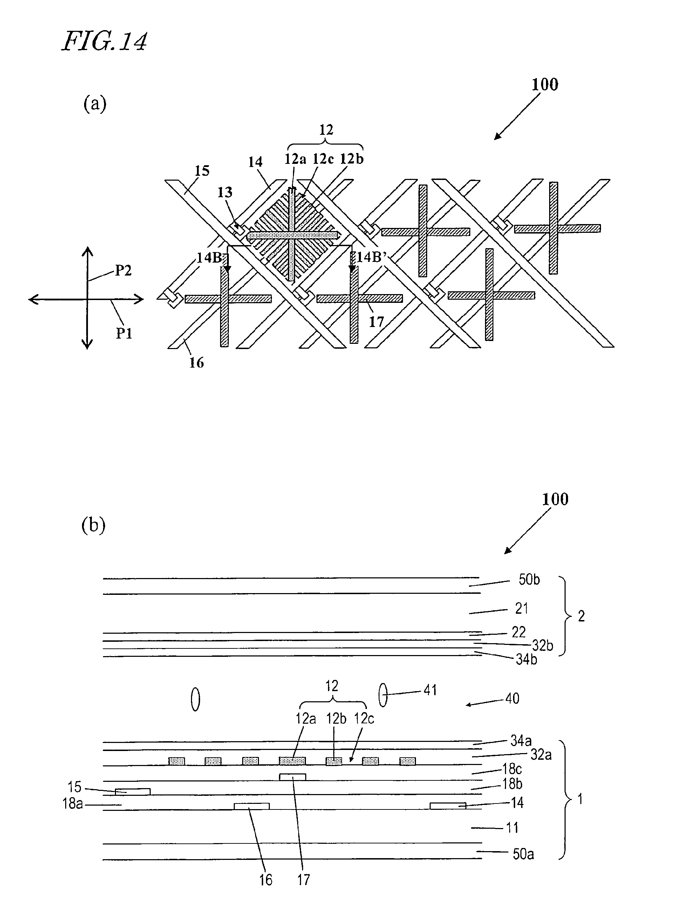

FIGS. **14(a)** and **(b)** show another example of structure of the storage capacitance electrodes **17.** In FIG. **14(a)****,** the pixel electrodes **12** are omitted except for one pixel so that the planar shape of the storage capacitance electrodes **17** can be seen easily.

In the example shown in FIGS. **14(a)** and **(b)**, the storage capacitance electrodes **17** are each cross-shaped and located so as to overlap the trunk portion **12a** of the pixel electrode **12.** At such an location, the storage capacitance electrode **17** overlaps only borders between the liquid crystal domains (i.e., areas which do not contribute to the transmittance almost at all). Therefore, even though the storage capacitance electrode **17** is formed of a metal material, the loss of the transmittance is small. The storage capacitance electrode **17** overlaps the trunk portion **12a** of the pixel electrode **12** and does not overlap the slits **12c.** Hence, the electric fields leaking from the storage capacitance electrode **17** can be electrically shielded by the trunk portion **12a** of the pixel electrode **12.** Thus, the disturbance of the alignment caused by the leaking electric fields can be suppressed.

In any of the structures shown in FIG. **13** and FIG. **14****,** where the storage capacitance electrodes **17** are formed of a transparent conductive material, the loss of the transmittance can be reduced. Also where the storage capacitance lines **16** are formed of a transparent conductive material, the loss of the transmittance can be reduced. Namely, the transmittance can be improved by forming at least either of the storage capacitance lines **16** and the storage capacitance electrodes **17** of a transparent conductive material. Needless to say, from the viewpoint of further improving the transmittance, it is preferable that both of the storage capacitance lines **16** and the storage capacitance electrodes **17** are formed of a transparent conductive material. Specifically as the transparent conductive material, a transparent oxidized metal material such as ITO, IZO or the like is usable.

Regarding the case where the storage capacitance lines **16** and the storage capacitance electrodes **17** are formed of a metal material in the structure shown in FIG. **13** and the case where storage capacitance lines **16** and the storage capacitance electrodes **17** are formed of a transparent conductive material in the structure shown in FIG. **14****,** the transmittance of the pixels was found by calculations and compared. For the calculations, the size of one pixel was set to 60 µm × 60 µm in both of the structures. Assuming that the pixel electrodes **12,** and the storage capacitance lines **16** and the storage capacitance electrodes **17** in the structure of FIG. **14****,** are formed of a transparent conductive material such as ITO, IZO or the like, the transmittance thereof was set to 100%. Assuming that the scanning lines **14** and the signal lines **15,** and the storage capacitance lines **16** and the storage capacitance electrodes **17** in the structure of FIG. **13****,** are formed of a metal material such as Al, Mo or the like, the transmittance thereof was set to 0%. As a result of the calculations, it was found that the transmittance of the pixels of the latter structure (structure of FIG. **14****)** is about 5% higher than that of the former structure (structure of FIG. **13****).**

### (EMBODIMENT 2)

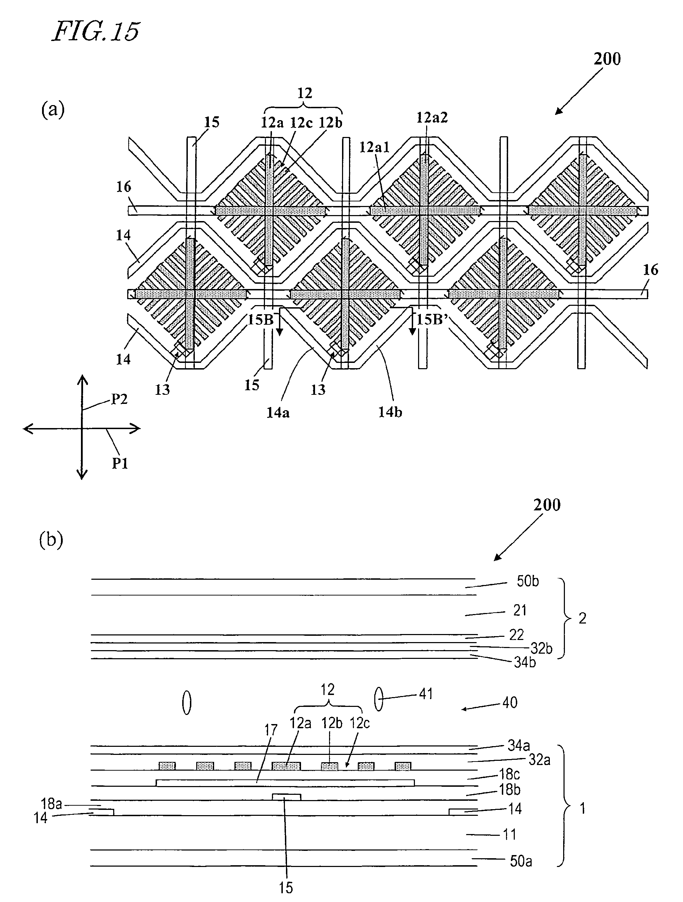

FIGS. **15(a)** and **(b)** show a liquid crystal display device **200** in this embodiment. FIG. **15(a)** is a plan view schematically showing the liquid crystal display device **200,** and FIG. **15(b)** is a cross-sectional view taken along line **15B-15B'** in FIG. **15(a)****.**

Pixel electrodes **12** in the liquid crystal display device **200** in this embodiment, like the pixel electrodes **12** in the liquid crystal display device **100** in Embodiment 1, each have a generally parallelogram shape with four right angles (more specifically, a generally square shape), each of four sides of which has an angle of about 45° with respect to the polarization axes **P1** and **P2.** The plurality of branch portions **12b** are located generally symmetrically with respect to the trunk portion **12a.**

The liquid crystal display device **200** in this embodiment is different from the liquid crystal display device **100** in Embodiment 1 in the locations of the scanning lines **14** and the like. Hereinafter, this will be described more specifically.

The signal lines **15** in the liquid crystal display device **200** extend in a direction generally parallel to the polarization axis **P2** of one of the pair of polarizing plates **50a** and **50b** (direction perpendicular to the polarization axis **P1** of the other polarizing plate), and are each located so as to overlap the trunk portions **12a** of the pixel electrodes **12** (more specifically, the vertical linear portions **12a2).** The scanning lines **14** each include a first portion **14a** extending in a direction having an angle of about 45° with respect to the polarization axes **P1** and **P2** and a second portion **14b** extending in a direction generally perpendicular to the first portion **14a,** and are each located between the pixel electrodes **12** adjacent to each other. Namely, each scanning line **14** extends zigzag as a whole between the pixel electrodes **12** adjacent to each other. The storage capacitance lines **16** extend in a direction generally perpendicular to the signal lines **15,** and are each located so as to overlap the trunk portions **12a** of the pixel electrodes **12** (more specifically, the horizontal linear portions **12a1).**

In the liquid crystal display device **200** in this embodiment, each of the sides defining the external shape of the pixel electrode **12** has an angle of about 45° with respect to the polarization axes **P1** and **P2.** Therefore, like in the liquid crystal display device **100** in Embodiment 1, the occurrence of the azimuthal angle shift in the vicinity of the pixel edge is suppressed, and as a result, the reduction of the transmittance and the deterioration of the viewing angle dependence of the γ characteristic are suppressed. The plurality of branch portions **12b** of the pixel electrode **12** are located generally symmetrically with respect to the trunk portion **12a** (at least in the vicinity of the trunk portion **12a),** and the occupying ratio of the branch portions **12b** in the vicinity of the horizontal linear portion **12a1** is approximately equal to the occupying ratio of the branch portions **12b** in the vicinity of the vertical linear portion **12a2** (this corresponds to that the number of the branch portions **12b** extending from the horizontal linear portion **12a1** is equal to the number of the branch portions **12b** extending from the vertical linear portion **12a2** in the case where the width **L** of the branch portions **12b** and the gap **S** are approximately the same in the entire pixel). Therefore, the adverse effect on the display quality caused by the azimuthal angle shift in the vicinity of the trunk portion **12a** can be suppressed.

In the liquid crystal display device **200** in this embodiment, the signal lines **15** extend in a direction generally parallel to the polarization axis **P2** of one of the pair of polarizing plates **50a** and **50b** (direction perpendicular to the polarization axis **P1** of the other polarizing plate), and are each located so as to overlap the trunk portions **12a** of the pixel electrodes **12.** Thus, each signal line **15** overlaps borders between the liquid crystal domains (i.e., areas which do not contribute to the transmittance almost at all). Therefore, the loss of the transmittance by the signal line **15** is small. The signal line **15** overlaps the trunk portions **12a** of the pixel electrodes **12.** Hence, the electric fields leaking from the signal line **15** can be electrically shielded by the trunk portions **12a** of the pixel electrodes **12a.** Thus, the disturbance of the alignment caused by the electric fields leaking from the signal line **15** can be suppressed.

Moreover, the scanning lines **14** are each located between the pixel electrodes **12** adjacent to each other. Therefore, the loss of the transmittance caused by the scanning line **14** is reduced, and also the disturbance of the alignment caused by the electric fields leaking from the scanning line **14** can be suppressed. The storage capacitance lines **16** extend in a direction generally perpendicular to the signal lines **15,** and are each located so as to overlap the trunk portions **12a** of the pixel electrodes **12.** Therefore, the loss of the transmittance caused by the storage capacitance line **16** is reduced, and also the disturbance of the alignment caused by the electric fields leaking from the storage capacitance line **16** can be suppressed.

A general shape of a liquid crystal display device is a generally parallelogram shape with four right angles, each of four sides of which is generally parallel to, or generally vertical to, the horizontal azimuth and the vertical azimuth. Thus, in a general liquid crystal display device, mount terminals are located at the horizontal azimuth (azimuthal angle of 0° or 180°) or at the vertical azimuth (azimuthal angle of 90° or 270°). Hence, when being located as described above, the lines can be drawn to the mount terminals more easily than when being located as in Embodiment 1.

In this embodiment, the signal lines **15** are each located so as to extend in a direction generally parallel to the polarization axis **P2** (direction generally perpendicular to the polarization axis **P1)** and so as to overlap the trunk portions **12a** of the pixel electrodes **12** (vertical linear portions **12a2),** and also the scanning lines **14** are each located so as to extend zigzag as a whole between the pixel electrodes **12** adjacent to each other. An opposite structure to this may be adopted. Namely, the scanning lines **14** may be each located so as to extend in a direction generally parallel to the polarization axis **P1** (direction generally perpendicular to the polarization axis **P2)** and so as to overlap the trunk portions **12a** of the pixel electrodes **12** (horizontal linear portions **12a1),** and the signal lines **15** may be each located so as to extend zigzag as a whole between the pixel electrodes **12** adjacent to each other.

Regarding the liquid crystal display device **200** in this embodiment and the conventional liquid crystal display device **500** shown in FIG. **23****,** the transmittance of the pixels was found by calculations and compared. For the calculations, the size of one pixel was set to 60 µm × 60 µm in both of the liquid crystal display devices **200** and **500.** Assuming that the pixel electrodes **12** and **512** are formed of a transparent oxidized metal material such as ITO, IZO or the like, the transmittance thereof was set to 100%. Assuming that the scanning lines **14** and **514** and the signal lines **15** and **515** are formed of a metal material such as Al, Mo or the like, the transmittance thereof was set to 0%. As a result of the calculations, it was found that the transmittance of the pixels of the liquid crystal display device **200** in this embodiment is about 25% higher than that of the conventional liquid crystal display device **500.** As can be seen, the transmittance can be significantly improved by suppression of the azimuthal angle shift in the vicinity of the pixel edge.

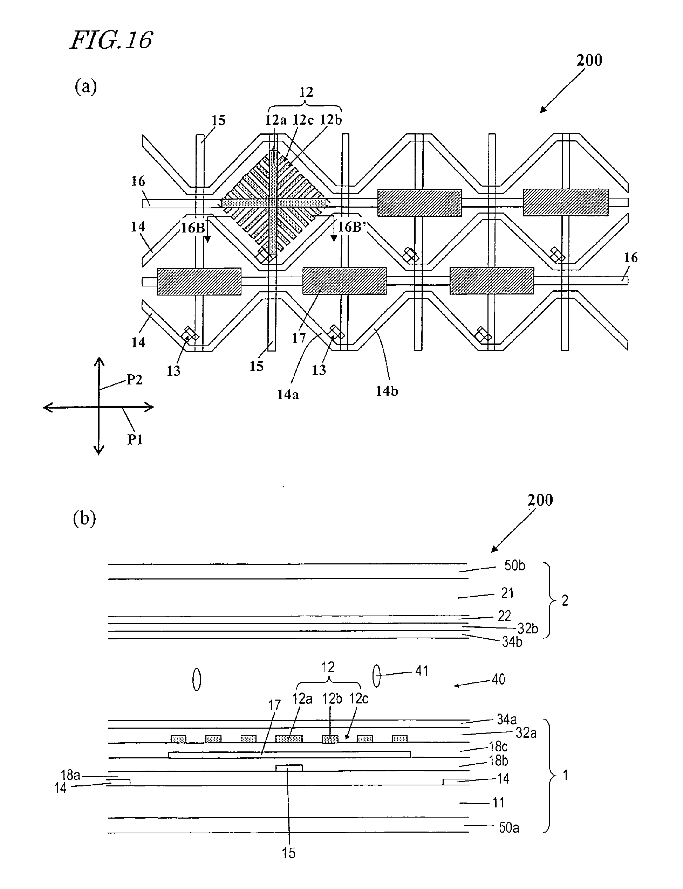

Now, a specific structure of the storage capacitance electrode **17** included in the liquid crystal display device **200** will be described. FIGS. **16(a)** and **(b)** show an example of structure of the storage capacitance electrodes **17.** In FIG. **16(a)****,** the pixel electrodes **12** are omitted except for one pixel so that the planar shape of the storage capacitance electrodes **17** can be seen easily.

As shown in FIG. **16(a)****,** the storage capacitance electrodes **17** each extend like a band in the same direction as the storage capacitance lines **16** (i.e., direction generally parallel to the polarization axis **P1).** As shown in FIG. **16(b)****,** the storage capacitance electrode **17** overlaps the trunk portion **12a** and the branch portions **12b** of the pixel electrode **12** with the third insulating layer **18c** interposed therebetween, and thus forms a storage capacitance.

In the example shown in FIGS. **16(a)** and **(b)**, the storage capacitance electrode **17** is wider than the trunk portion **12a** (horizontal linear portion **12a1).** Therefore, in the case where the storage capacitance electrode **17** is formed of a metal material such as Al, Mo or the like, the loss of the transmittance is large. The storage capacitance electrode **17,** which is wider than the trunk portion **12a,** also overlaps the slits **12c** in addition to the trunk portion **12a** and the branch portions **12b.** Therefore, when a driving method of applying a voltage to the storage capacitance electrode **17** in the step of PSA processing is adopted, the alignment realized by the fishbone structure may be disturbed by the electric fields leaking from the storage capacitance electrode **17.**

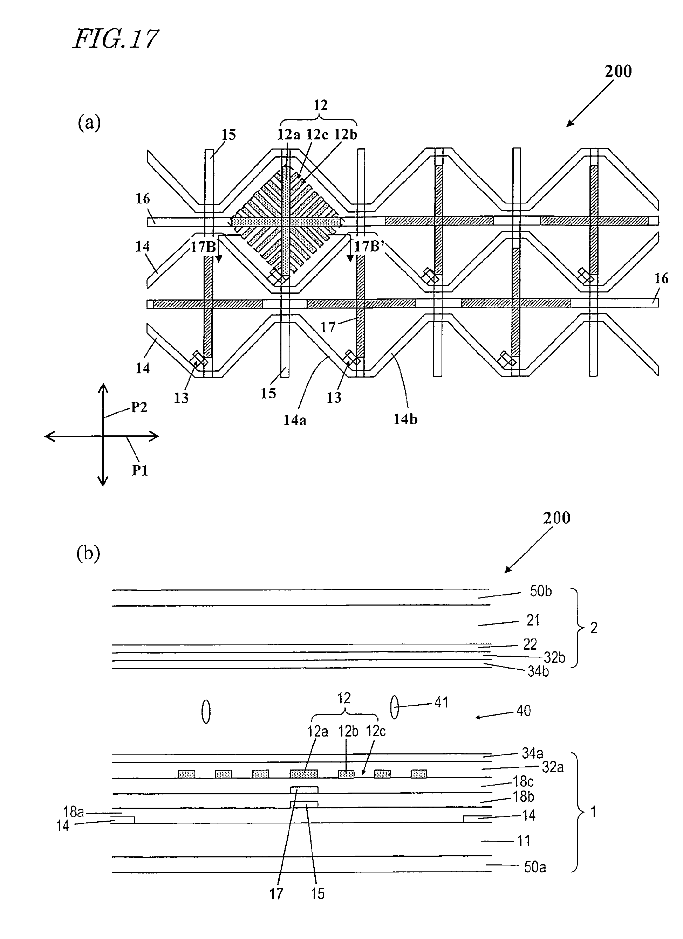

FIGS. **17(a)** and **(b)** show another example of structure of the storage capacitance electrodes **17.** In FIG. **17(a)****,** the pixel electrodes **12** are omitted except for one pixel so that the planar shape of the storage capacitance electrodes **17** can be seen easily.

In the example shown in FIGS. **17(a)** and **(b)**, the storage capacitance electrodes **17** are each cross-shaped and located so as to overlap the trunk portion **12a.** At such an location, the storage capacitance electrode **17** overlaps only borders between the liquid crystal domains (i.e., areas which do not contribute to the transmittance almost at all). Therefore, even though the storage capacitance electrode **17** is formed of a metal material, the loss of the transmittance is small. The storage capacitance electrode **17** overlaps the trunk portion **12a** of the pixel electrode **12** and does not overlap the slits **12c.** Hence, the electric fields leaking from the storage capacitance electrode **17** can be electrically shielded by the trunk portion **12a** of the pixel electrode **12.** Thus, the disturbance of the alignment caused by the leaking electric fields can be suppressed.

In any of the structures shown in FIG. **16** and FIG. **17****,** where the storage capacitance electrodes **17** are formed of a transparent conductive material, the loss of the transmittance can be reduced. Also where the storage capacitance lines **16** are formed of a transparent conductive material, the loss of the transmittance can be reduced. Namely, the transmittance can be improved by forming at least either of the storage capacitance lines **16** and the storage capacitance electrodes **17** of a transparent conductive material. Needless to say, from the viewpoint of further improving the transmittance, it is preferable that both of the storage capacitance lines **16** and the storage capacitance electrodes **17** are formed of a transparent conductive material. Specifically as the transparent conductive material, a transparent oxidized metal material such as ITO, IZO or the like is usable.

Regarding the case where the storage capacitance lines **16** and the storage capacitance electrodes **17** are formed of a metal material in the structure shown in FIG. **16** and the case where storage capacitance lines **16** and the storage capacitance electrodes **17** are formed of a transparent conductive material in the structure shown in FIG. **17****,** the transmittance of the pixels was found by calculations and compared. For the calculations, the size of one pixel was set to 60 µm × 60 µm in both of the structures. Assuming that the pixel electrodes **12,** and the storage capacitance lines **16** and the storage capacitance electrodes **17** in the structure of FIG. **17****,** are formed of a transparent conductive material such as ITO, IZO or the like, the transmittance thereof was set to 100%. Assuming that the scanning lines **14** and the signal lines **15,** and the storage capacitance lines **16** and the storage capacitance electrodes **17** in the structure of FIG. **16****,** are formed of a metal material such as Al, Mo or the like, the transmittance thereof was set to 0%. As a result of the calculations, it was found that the transmittance of the pixels of the latter structure (structure of FIG. **17****)** is about 5% higher than that of the former structure (structure of FIG. **16****).**

### (EMBODIMENT 3)

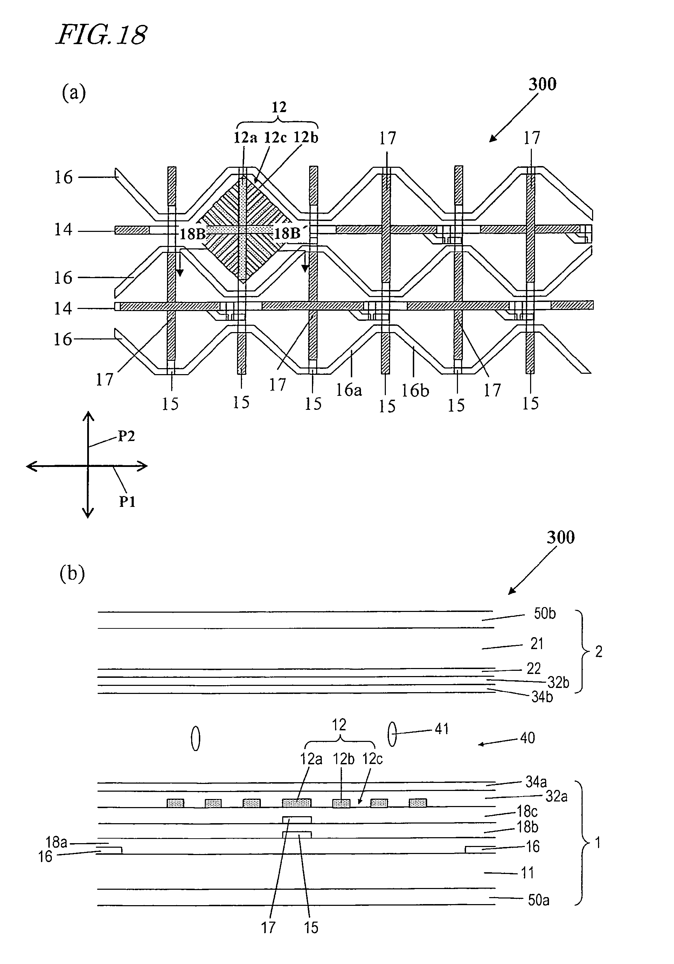

FIGS. **18(a)** and **(b)** show a liquid crystal display device **300** in this embodiment. FIG. **18(a)** is a plan view schematically showing the liquid crystal display device **300,** and FIG. **18(b)** is a cross-sectional view taken along line **18B-18B'** in FIG. **18(a)****.**

Pixel electrodes **12** in the liquid crystal display device **300** in this embodiment, like the pixel electrodes **12** in the liquid crystal display devices **100** and **200** in Embodiments 1 and 2, each have a generally parallelogram shape with four right angles (more specifically, a generally square shape), each of four sides of which has an angle of about 45° with respect to the polarization axes **P1** and **P2.** The plurality of branch portions **12b** are located generally symmetrically with respect to the trunk portion **12a.**

The liquid crystal display device **300** in this embodiment is different from the liquid crystal display devices **100** and **200** in Embodiments 1 and 2 in the locations of the scanning lines **14** and the like. Hereinafter, this will be described more specifically.

The scanning lines **14** in the liquid crystal display device **300** extend in a direction generally parallel to the polarization axis **P1** of one of the pair of polarizing plates **50a** and **50b** (direction perpendicular to the polarization axis **P2** of the other polarizing plate), and are each located so as to overlap the trunk portions **12a** of the pixel electrodes **12** (more specifically, the horizontal linear portions **12a1).** The signal lines **15** extend in a direction generally perpendicular to the scanning lines **14** (i.e., direction generally parallel to the polarization axis **P2** and generally perpendicular to the polarization axis **P1),** and are each located so as to overlap the trunk portions **12a** of the pixel electrodes **12** (more specifically, the vertical linear portions **12a2).**

The storage capacitance lines **16** each include a first portion **16a** extending in a direction having an angle of about 45° with respect to the polarization axes **P1** and **P2** and a second portion **16b** extending in a direction generally perpendicular to the first portion **16a,** and are each located between the pixel electrodes **12** adjacent to each other. Namely, each storage capacitance line **16** extends zigzag as a whole between the pixel electrodes **12** adjacent to each other. The storage capacitance electrodes **17** are cross-shaped and are each located so as to overlap the trunk portion **12a** of the pixel electrode **12.**

In the liquid crystal display device **300** in this embodiment, each of the sides defining the external shape of the pixel electrode **12** has an angle of about 45° with respect to the polarization axes **P1** and **P2.** Therefore, like in the liquid crystal display devices **100** and **200** in Embodiments 1 and 2, the occurrence of the azimuthal angle shift in the vicinity of the pixel edge is suppressed, and as a result, the reduction of the transmittance and the deterioration of the viewing angle dependence of the γ characteristic are suppressed. The plurality of branch portions **12b** of the pixel electrode **12** are located generally symmetrically with respect to the trunk portion **12a.** Therefore, the adverse effect on the display quality caused by the azimuthal angle shift in the vicinity of the trunk portion **12a** can be suppressed.

In the liquid crystal display device **300** in this embodiment, the scanning lines **14** and the signal lines **15** extend in a direction generally parallel to, or generally vertical to, the polarization axis **P1** of one of the pair of polarizing plates **50a** and **50b,** and are each located so as to overlap the trunk portions **12a** of the pixel electrodes **12.** Thus, the scanning lines **14** and the signal lines **15** each overlap borders between the liquid crystal domains (i.e., areas which do not contribute to the transmittance almost at all). Therefore, the loss of the transmittance by the scanning line **14** and the signal line **15** is reduced. The scanning line **14** and the signal line **15** each overlap the trunk portions **12a.** Hence, the electric fields leaking from the scanning line **14** and the signal line **15** can be electrically shielded by the trunk portions **12a** of the pixel electrodes **12a.** Thus, the disturbance of the alignment caused by the electric fields leaking from the scanning line **14** and the signal line **15** can be suppressed.

Moreover, the storage capacitance lines **16** are each located between the pixel electrodes **12** adjacent to each other. Therefore, the loss of the transmittance caused by the storage capacitance line **16** is reduced, and also the disturbance of the alignment caused by the electric fields leaking from the storage capacitance line **16** can be suppressed.

When the lines are located as described above, like when the lines are located as described in Embodiment 2, there is an effect that the lines can be drawn to the mount terminal more easily than when being located as in Embodiment 1.

As described above, the storage capacitance electrodes **17** are each cross-shaped and located so as to overlap the trunk portion **12a.** The storage capacitance electrode **17** overlaps only borders between the liquid crystal domains (i.e., areas which do not contribute to the transmittance almost at all). Therefore, even though the storage capacitance electrode **17** is formed of a metal material, the loss of the transmittance is small. The storage capacitance electrode **17** overlaps the trunk portion **12a** of the pixel electrode **12** and does not overlap the slits **12c.** Hence, the electric fields leaking from the storage capacitance electrode **17** can be electrically shielded by the trunk portion **12a** of the pixel electrode **12.** Thus, the disturbance of the alignment caused by the leaking electric fields can be suppressed.

### (OTHER EMBODIMENTS)

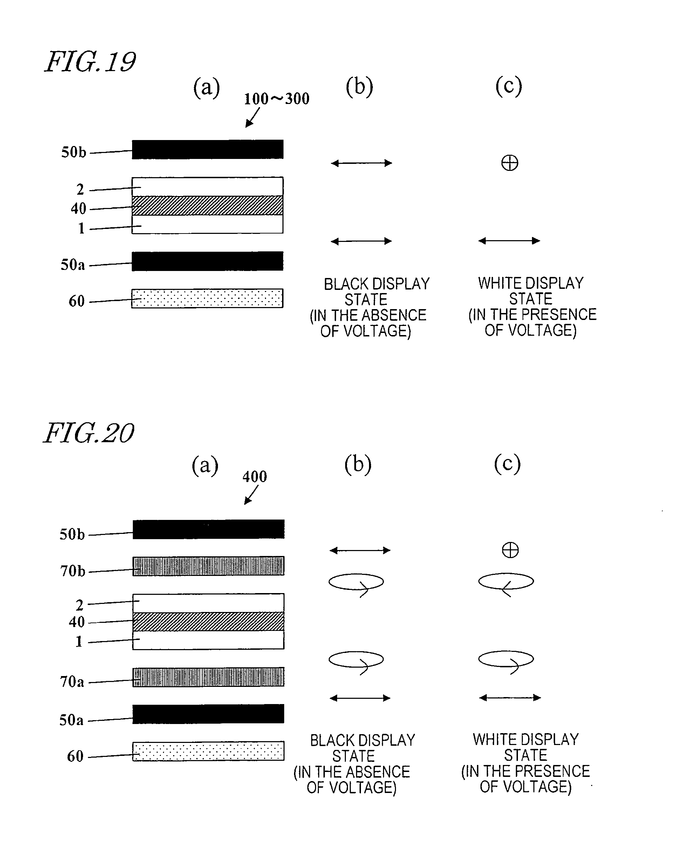

In the liquid crystal display devices **100** through **300** in Embodiments 1 through 3, linear polarization transmitted through the rear-side polarizing plate **50a** is incident on the liquid crystal layer **40,** and the liquid crystal layer **40** modulates the linear polarization to provide display. By contrast, by a structure in which circular polarization is incident on the liquid crystal layer **40** and the liquid crystal layer **40** modulates the circular polarization to provide display (i.e., structure using circular polarization), brighter display can be realized. A reason for this will be described more specifically with reference to FIG. **19** through FIG. **22****.**

FIG. **19(a)** schematically shows a cross-sectional structure of the liquid crystal display devices **100** through **300.** FIGS. **19(b)** and **(c)** each schematically show a polarization state of light passing the inside of the liquid crystal display devices **100** through **300.** FIG. **19(b)** corresponds to black display (in the absence of a voltage), and FIG. **19 (c)** corresponds to white display (in the presence of a voltage). FIG. **20(a)** schematically shows a cross-sectional structure of a liquid crystal display device **400,** which uses circular polarization. FIGS. **20(b)** and **(c)** each schematically show a polarization state of light passing the inside of the liquid crystal display device **400.** FIG. **20(b)** corresponds to black display (in the absence of a voltage), and FIG. **20(c)** corresponds to white display (in the presence of a voltage). In both of the FIG. **19** and FIG. **20****,** the polarization axis of the rear-side polarizing plate **50a** is parallel to the left-right direction of the paper sheet of the figures, and the polarization axis of the observer-side polarizing plate **50b** is parallel to the direction vertical to the paper sheet of the figures.

As shown in FIG. **19(a)****,** an illumination device (backlight) **60** is provided at the rearmost position of the liquid crystal display devices **100** through **300.** As shown in FIGS. **19(b)** and **(c)**, light emitted from the backlight passes the rear-side polarizing plate **50a** to become linear polarization having a polarization direction which is parallel to the left-right direction of the paper sheet of the figures. As shown in FIG. **19(b)****,** in the absence of a voltage, the polarization state of this linear polarization is not changed even after the linear polarization passes the liquid crystal layer **40.** Therefore, the linear polarization reaches the observer-side polarizing plate **50b** with the polarization state being kept (i.e., with the polarization direction being still parallel to the left-right direction of the paper sheet of the figures), and is absorbed. Therefore, in the absence of a voltage, black display is provided. As shown in FIG. **19(c)****,** in the presence of a voltage, this linear polarization passes the liquid crystal layer **40** to have the polarization direction thereof rotated by 90°. Therefore, the linear polarization reaches the observer-side polarizing plate **50b** as linear polarization having a polarization direction which is parallel to the direction vertical to the paper sheet of the figures, and is output toward the observer. Therefore, in the presence of a voltage, white display is provided.

Unlike the liquid crystal display devices **100** through **300,** the liquid crystal display device **400** shown in FIG. **20(a)** includes a first phase plate **70a** and a second phase plate **70b.** The first phase plate **70a** is located between the rear-side polarizing plate **50a** and the liquid crystal layer **40,** and the second phase plate **70b** is located between the observer-side polarizing plate **50b** and the liquid crystal layer **40.** Specifically, the first phase plate **70a** is a λ/4 plate having a delay axis which has an angle of about 45° with respect to the polarization axis of the polarizing plate **50a.** Specifically, the second phase plate **70b** is a λ/4 plate having a delay axis generally perpendicular to the delay axis of the first phase plate **70a.** The TFT substrate **1** in the liquid crystal display device **400** has substantially the same structure as that of the TFT substrate **1** in the liquid crystal display devices **100** through **300.**

As shown in FIGS. **20(b)** and **(c)**, light emitted from the backlight **60** passes the rear-side polarizing plate **50a** to become linear polarization having a polarization direction which is parallel to the left-right direction of the paper sheet of the figures. This linear polarization passes the first phase plate **70a** to become clockwise circular polarization. As shown in FIG. **20(b)****,** in the absence of a voltage, the polarization state of the circular polarization is not changed even after the circular polarization passes the liquid crystal layer **40.** Therefore, the circular polarization reaches the second phase plate **70b** with the polarization state being kept (i.e., as the clockwise circular polarization), and passes the second phase plate **70b** to become linear polarization having a polarization direction which is parallel to the left-right direction of the paper sheet of the figures. This linear polarization reaches the observer-side polarizing plate **50b** and is absorbed. Therefore, in the absence of a voltage, black display is provided. As shown in FIG. **20(c)****,** in the presence of a voltage, the clockwise circular polarization which has passed the first phase plate **70a** passes the liquid crystal layer **40** to become counterclockwise circular polarization. This counterclockwise circular polarization passes the second phase plate **70b** to become linear polarization having a polarization direction which is parallel to the direction vertical to the paper sheet of the figures. This linear polarization reaches the observer-side polarizing plate **50b** and is absorbed. Therefore, in the presence of a voltage, white display is provided.

As described above, in the liquid crystal display devices **100** through **300,** the light incident on the liquid crystal layer **40** is linear polarization. In this case, the transmittance of a certain area of the pixel depends on an angle made by the alignment azimuth of the liquid crystal molecules **41** in this area and the polarization direction (incident azimuth) of the linear polarization incident on the liquid crystal layer **40.** Specifically, when the angle made by the alignment azimuth of the liquid crystal molecules **41** and the incident azimuth is 45°, the transmittance is maximum; whereas when the angle is 0° or 90°, the transmittance is minimum. This occurs because of the birefringence property of the liquid crystal molecules **41.** In actuality, however, all the liquid crystal molecules **41** in a liquid crystal domain are not aligned in the same azimuth completely. Therefore, due to the above-described incident azimuth dependence of the transmittance, the transmittance is locally lowered.

By contrast, in the liquid crystal display device **400,** the light incident on the liquid crystal layer **40** is circular polarization. In this case, the transmittance does not have the above-described incident azimuth dependence. Namely, regardless of the azimuth in which the liquid crystal molecules **41** are aligned, the liquid crystal molecules **41** contribute to the transmittance. Hence, brighter display can be realized.

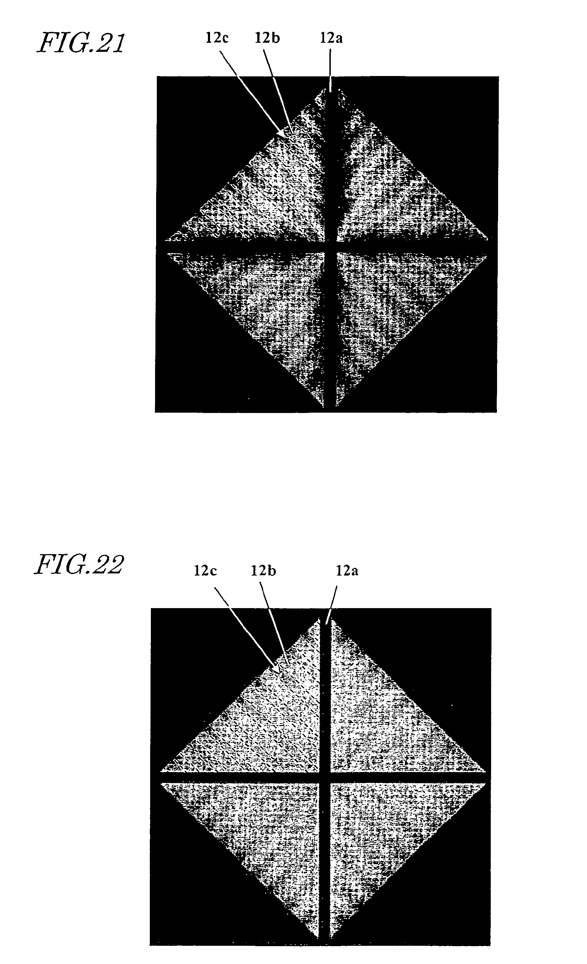

FIG. **21** shows the transmission characteristic, obtained by calculations, of one pixel in the liquid crystal display device **100** in Embodiment 1 (adopting a structure using linear polarization) in the presence of a voltage. FIG. **22** shows the transmission characteristic, obtained by calculations, of one pixel in the liquid crystal display device **400** in this embodiment (adopting a structure using circular polarization) in the presence of a voltage. The liquid crystal display device **400** has the same structure as that of the liquid crystal display device **100** except that the liquid crystal display device **400** includes the first phase plate **70a** and the second phase plate **70b.** The size of one pixel was set to 80 µm × 80 µm. The storage capacitance electrode **17** formed of a metal material was located to overlap the trunk portion **12a.**

As seen from FIG. **21****,** in the liquid crystal display device **100** using linear polarization, the transmittance is lowered on the slits **12c** and in the vicinity of the trunk portion **12a.** This is caused by the liquid crystal molecules **41** aligned in an azimuth shifted from the alignment azimuth defined by the slits **21c.**

By contrast, as can be seen from FIG. **22****,** in the liquid crystal display device **400** using circular polarization, the reduction of the transmittance on the slits **12c** and in the vicinity of the trunk portion **12a** is alleviated. This occurs for the following reason. Since the circular polarization is incident on the liquid crystal layer **40,** the transmittance does not have the incident azimuth dependence, and so the liquid crystal molecules **41** aligned in an azimuth shifted from the alignment azimuth defined by the slits **21c** also contribute to the transmittance. The transmittance of the example shown in FIG. **22** is about 10% higher than the transmittance of the example shown in FIG. **21****.**

As can be seen, adoption of a structure using circular polarization can alleviate the reduction of the transmittance on the slits **12c** and in the vicinity of the trunk portion **12a.** It should be noted that on the slits **12c** on which the conductive film is not provided, the transmittance is slightly lowered even if the circular polarization is used. This occurs for the following reason. The effective voltage applied on the slits **12c** is lower than that applied on the branch portions **12b,** and so the liquid crystal molecules **41** are inclined less. In order to improve the transmittance on the slits **12c,** it is preferable that the widths of the lines and spaces of the striped pattern (i.e., the width **L** of the branch portions **12b** and the gap **S)** are decreased (specifically, decreased to the range of 1.5 µm or greater and 5.0 µm or less).

### INDUSTRIAL APPLICABILITY

The present invention is preferably usable for a liquid crystal display device in which a 4-domain alignment structure is formed in each of pixels when a voltage is applied. A liquid crystal display device according to the present invention is preferably usable as a display section of any of various types of electronic devices including mobile phones, PDAs, notebook computers, monitors, TV receivers and the like.

### REFERENCE SIGNS LIST

- **1**: Active matrix substrate (TFT substrate)
- **2**: Counter substrate (color filter substrate)
- **12**: Pixel electrode
- **12a**: Trunk portion
- **12b, 12b1, 12b2, 12b3, 12b4**: Branch portion
- **12c**: Slit
- **13**: Thin film transistor (TFT)
- **14**: Scanning line
- **15**: Signal line
- **16**: Storage capacitance line
- **17**: Storage capacitance electrode
- **22**: Counter electrode
- **32a, 32b**: Vertical alignment film
- **34a, 34b**: Alignment sustaining layer
- **40**: Liquid crystal layer
- **41**: Liquid crystal molecules
- **50a, 50b**: Polarizing plate
- **70a**: First phase plate
- **70b**: Second phase plate
- **100, 200, 300, 400**: Liquid crystal display device

## Claims

1. A liquid crystal display device comprising a plurality of pixels and a pair of polarizing plates located in crossed Nicols and providing display in a normally black mode, wherein:
each of the plurality of pixels includes:
a liquid crystal layer containing liquid crystal molecules having a negative dielectric anisotropy;
a pixel electrode and a counter electrode facing each other with the liquid crystal layer interposed therebetween;
a pair of vertical alignment films respectively provided between the pixel electrode and the liquid crystal layer and between the counter electrode and the liquid crystal layer; and
a pair of alignment sustaining layers respectively provided on surfaces of the pair of vertical alignment films on the liquid crystal layer side and formed of a photopolymerizable material;
wherein:
the pixel electrode includes a cross-shaped trunk portion located so as to overlap polarization axes of the pair of polarizing plates, a plurality of branch portions extending from the trunk portion in a direction having an angle of about 45° with respect thereto, and a plurality of slits formed between the plurality of branch portions;
the pixel electrode has an overall shape which is a generally parallelogram shape with four right angles, each of four sides of which has an angle of about 45° with respect to the polarization axes of the pair of polarizing plates; and
the plurality of branch portions are located generally symmetrically with respect to the trunk portion.

2. The liquid crystal display device of claim 1, which includes a first substrate including the pixel electrode and a second substrate including the counter electrode;
wherein:
the first substrate further includes a switching element electrically connected to the pixel electrode, a scanning line for supplying a scanning signal to the switching element, and a signal line for supplying an image signal to the switching element; and
at least one of the scanning line and the signal line extends in a direction having an angle of about 45° with respect to the polarization axes of the pair of polarizing plates, and is located between the pixel electrodes adjacent to each other.

3. The liquid crystal display device of claim 2, wherein:
both of the scanning line and the signal line extend in a direction having an angle of about 45° with respect to the polarization axes of the pair of polarizing plates, and are located between the pixel electrodes adjacent to each other.

4. The liquid crystal display device of claim 1, which includes a first substrate including the pixel electrode and a second substrate including the counter electrode;
wherein:
the first substrate further includes a switching element electrically connected to the pixel electrode, a scanning line for supplying a scanning signal to the switching element, and a signal line for supplying an image signal to the switching element; and
at least one of the scanning line and the signal line extends in a direction generally parallel to, or generally perpendicular to, the polarization axis of one of the pair of polarizing plates, and is located so as to overlap the trunk portion of the pixel electrode.

5. The liquid crystal display device of claim 4, wherein:
both of the scanning line and the signal line extend in a direction generally parallel to, or generally perpendicular to, the polarization axis of one of the pair of polarizing plates, and are located so as to overlap the trunk portion of the pixel electrode.

6. The liquid crystal display device of claim 5, wherein:
the first substrate further includes a storage capacitance line; and
the storage capacitance line includes a first portion extending in a direction having an angle of about 45° with respect to the polarization axes of the pair of polarizing plates and a second portion extending in a direction generally perpendicular to the first portion, and is located between the pixel electrodes adjacent to each other.

7. The liquid crystal display device of claim 4, wherein:
one of the scanning line and the signal line extends in a direction generally parallel to, or generally perpendicular to, the polarization axis of one of the pair of polarizing plates, and is located so as to overlap the trunk portion of the pixel electrode; and
the other of the scanning line and the signal line includes a first portion extending in a direction having an angle of about 45° with respect to the polarization axes of the pair of polarizing plates and a second portion extending in a direction generally perpendicular to the first portion, and is located between the pixel electrodes adjacent to each other.

8. The liquid crystal display device of claim 7, wherein:
the first substrate further includes a storage capacitance line;
the signal line extends in a direction generally parallel to, or generally perpendicular to, the polarization axis of one of the pair of polarizing plates, and is located so as to overlap the trunk portion of the pixel electrode;
the scanning line includes a first portion extending in a direction having an angle of about 45° with respect to the polarization axes of the pair of polarizing plates and a second portion extending in a direction generally perpendicular to the first portion, and is located between the pixel electrodes adjacent to each other; and
the storage capacitance line extends in a direction generally perpendicular to the signal line, and is located so as to overlap the trunk portion of the pixel electrode.

9. The liquid crystal display device of any one of claims 1 through 8, wherein:
the first substrate further includes a storage capacitance line and a storage capacitance electrode electrically connected to the storage capacitance line; and
the storage capacitance electrode is cross-shaped and is located so as to overlap the trunk portion.

10. The liquid crystal display device of claim 9, wherein at least one of the storage capacitance line and the storage capacitance electrode is formed of a transparent conductive material.

11. The liquid crystal display device of claim 9, wherein both of the storage capacitance line and the storage capacitance electrode are formed of a transparent conductive material.

12. The liquid crystal display device of any one of claims 1 through 11, wherein circular polarization is incident on the liquid crystal layer, and display is provided by the liquid crystal layer modifying the circular polarization.

13. The liquid crystal display device of claim 12, further comprising a first phase plate located between one of the pair of polarizing plates and the liquid crystal layer, and a second phase plate located between the other of the pair of polarizing plates and the liquid crystal layer.

14. The liquid crystal display device of claim 13, wherein:
the first phase plate is a λ/4 plate having a delay axis which has an angle of about 45° with respect to the polarization axis of the one of the pair of polarization axes; and
the second phase plate is a λ/4 plate having a delay axis generally perpendicular to the delay axis of the first phase plate.

15. The liquid crystal display device of any one of claims 1 through 14, wherein:
when a voltage is applied between the pixel electrode and the counter electrode, four liquid crystal domains are formed in the liquid crystal layer in each of the plurality of pixels;
four directors respectively representative of alignment directions of the liquid crystal molecules in the four liquid crystal domains have different azimuths from one another; and
each of the azimuths of the four directors has an angle of about 45° with respect to the polarization axes of the pair of polarizing plates.

16. The liquid crystal display device of claim 15, wherein:
the four liquid crystal domains are a first liquid crystal domain in which the azimuth of the director is a first azimuth, a second liquid crystal domain in which the azimuth of the director is a second azimuth, a third liquid crystal domain in which the azimuth of the director is a third azimuth, and a fourth liquid crystal domain in which the azimuth of the director is a fourth azimuth; and a difference between any two azimuths among the first azimuth, the second azimuth, the third azimuth and the fourth azimuth is approximately equal to an integral multiple of 90°; and
the azimuths of the directors of the liquid crystal domains adjacent to each other with the trunk portion interposed therebetween are different from each other by about 90°.
